# EUROPÄISCHE PATENTSCHRIFT

(11) **EP 2 003 343 B1**
(45) Veröffentlichungstag und Bekanntmachung des Hinweises auf die Patenterteilung: **25.05.2011**
(21) Anmeldenummer: 08010316.1
(22) Anmeldetag: 06.06.2008
(51) Int. Cl.: F04D 29/02, F04D 29/42, B29C 45/14

(54) **Kunststoffverdichtergehäuse und Verfahren zur Herstellung eines Kunststoffverdichtergehäuses**
Plastic compressor casing and method for manufacturing a plastic compressor casing
Boîtier de turbo-compresseur en matière synthétique et son procédé de fabrication

(30) Priorität: 11.06.2007 DE 102007027282
(43) Veröffentlichungstag der Anmeldung: 17.12.2008
(73) Patentinhaber: WOCO Industrietechnik GmbH, 63628 Bad Soden-Salmünster (DE)
(72) Erfinder: Cvjeticanin, Nenad, Dr., 60320 Frankfurt (DE); Ludwig, Uwe, 63628 Bad Soden-Salmünster (DE)
(74) Vertreter: Weber-Bruls, Dorothée

(56) Entgegenhaltungen:
- DE-A1- 2 706 110
- DE-A1- 10 260 042
- DE-B3- 10 314 209
- JP-A- 2000 205 192
- US-A- 5 219 461
- US-B1- 6 193 463

## Beschreibung

Die vorliegende Erfindung betrifft ein Kunststoffverdichtergehäuse für einen Turbolader, mit zumindest einem ersten Gehäuseteil und zumindest einem zweiten Gehäuseteil, die jeweils zumindest bereichsweise zumindest einen Duroplastwerkstoff umfassen, wobei das erste Gehäuseteil und/oder das zweite Gehäuseteil zumindest zwei Einzelelemente umfaßt bzw. umfassen, sowie ein Verfahren zur Herstellung eines Kunststoffverdichtergehäuses, und einen Turbolader umfassend ein erfindungsgemäßes Kunststoffverdichtergehäuse.

Aus dem Stand der Technik ist eine Vielzahl von unterschiedlichen Kunststoffverdichtergehäusen bekannt.

So offenbart die DE 103 14 209 B3 ein Gehäuse für einen Radialverdichter und ein Verfahren zum Herstellen des Gehäuses. Das Gehäuse besteht aus einem ersten Gehäuseteil, welches aus zwei Einzelelementen, die jeweils aus einem Duroplast gefertigt sein können, besteht. Ein erstes Einzelelement ist mit einem zweiten Einzelelement fest verbindbar. Dazu weist das erste Einzelelement eine Vertiefung und/oder wenigstens einen Hohlraum auf, welchem eine Vertiefung und/oder ein Hohlraum in dem zweiten Einzelelement derart zugeordnet werden kann, daß ein von den beiden miteinander festverbundenen Einzelelementen begrenztes Hohlraumsystem gebildet wird, in welches ein fließfähiger und sich verfestigender Verbundstoff, wie ein Klebstoff oder ein thermoplastischer Kunststoff, zur Bildung eines Festverbunds der beiden Einzelelemente einbringbar ist. Obwohl sich dieses Gehäuse grundsätzlich bewährt hat, ist die Geometrie des Gehäuses auf bestimmte Querschnittsformen beschränkt. So werden die Einzelelemente bei einer Fertigung aus Duroplast in Formen ausgebildet, wobei es für eine Entformung der Einzelelemente notwendig ist, daß auf Hinterschnitte oder dergleichen verzichtet wird.

Zur Überwindung dieser Nachteile schlägt die US 6,193,463 B1 ein Gußgehäuse für Zentrifugalkompressoren vor. Das Gehäuse besteht aus zwei Gehäuseteilen, die über eine Schraubverbindung miteinander verbunden werden. Ein erstes Gehäuseteil bildet eine Rückwand während ein zweites Gehäuseteil eine Oberschale bildet. Das zweite Gehäuseteil ist zweistückig ausgebildet, wobei die Querschnittsgeometrie der Einzelelemente so ausgestaltet ist, daß diese mittels einer Form ausgeformt werden können, wobei auf Hinterschnitte verzichtet werden kann. Nachteilig bei diesem Gehäuse ist jedoch, daß es aufgrund einer unzureichenden Befestigung der Einzelelemente aneinander den extremen Belastungen, wie sie beispielsweise in einem Turbolader entstehen, nicht Stand halten kann.

Weiterhin offenbart die DE 102 60 042 A1 ein gattungsgemäßes Kunststoffverdichtergehäuse in Form eines Turboladergehäuses. Das Turboladergehäuse weist ein aus einem Duroplast gefertigtes Verdichtergehäuse auf, welches aus einem erste Gehäuseteil in Form einer Verdichterrückwand aus Duroplast gebildet ist, sowie ein zweites Gehäuseteil in Form eines Verdichterfrontteils, wobei das Verdichterfrontteil aus zwei Einzelelementen in Form einer Außenschale und einer Laufschale ausgebildet ist. Eine Verbindung zwischen der Außenschale und der Laufschale wird durch eine Klebe- und/oder Schnappverbindung erreicht. Nachteilig bei diesem Turboladergehäuse ist ebenfalls, daß es bei den hohen Belastungen, die innerhalb eines Turboladers auftreten können, zu einer Lösung der Verbindung der Laufschale von der Außenschale kommen kann, so daß es beispielsweise bei einem Containment-Test zur einer Zerstörung des Gehäuses kommt, wobei das Gehäuse aufgrund herumfliegender Einzelteile ein großes Gefahrenpotential für Verletzungen und Beschädigungen umliegender Gegenstände und Personen darstellt.

Es ist daher Aufgabe der vorliegenden Erfindung das gattungsgemäße Kunststoffverdichtergehäuse derartig weiterzuentwickeln, daß die Nachteile des Stands der Technik überwunden werden, insbesondere ein Kunststoffverdichtergehäuse zu liefern, welches eine hohe Bauteilkomplexität, insbesondere mit mehrfachen Hinterschnitten, ermöglicht und welches gleichzeitig höchsten Ansprüchen hinsichtlich Stabilität und Bauteilsicherheit entspricht. Weiterhin sollen ein Verfahren zur Herstellung eines Kunststoffverdichtergehäuses sowie ein Turbolader geliefert werden, welche die aus dem Stand der Technik bekannten Nachteile überwinden.

Die das Kunststoffverdichtergehäuse betreffende Aufgabe wird dadurch gelöst, daß das erste Gehäuseteil und das zweite Gehäuseteil zumindest bereichsweise mit zumindest einem Duroplastkörper oder zumindest einem Thermoplastkörper so umspritzt sind, daß das erste Gehäuseteil, das zweite Gehäuseteil und die Einzelelemente des ersten Gehäuseteils und/oder des zweiten Gehäuseteils jeweils zumindest bereichsweise mit dem Duroplastkörper oder dem Thermoplastkörper in Kontakt stehen.

Dabei kann insbesondere vorgesehen sein, daß das erste Gehäuseteil zumindest ein erstes Einzelelement, vorzugsweise in Form zumindest eines, insbesondere zumindest eine Schneckeninnenkontur und/oder zumindest einen Verdichterkanal zumindest teilweise bereitstellenden bzw. begrenzenden, ersten Innenteils, und/oder ein zweites Einzelelement, vorzugsweise in Form zumindest einer Oberschale, umfaßt.

Bei den beiden vorgenannten Alternativen kann vorgesehen sein, daß das zweite Gehäuseteil zumindest ein drittes Einzelelement, vorzugsweise in Form zumindest eines, insbesondere zumindest eine Schneckeninnenkontur und/oder zumindest einen Verdichterkanal zumindest teilweise bereitstellenden bzw. begrenzenden, zweiten Innenteils, und/oder ein viertes Einzelelement, vorzugsweise in Form zumindest einer Unterschale, umfaßt.

Eine bevorzugte Ausführungsform der Erfindung ist dadurch gekennzeichnet, daß das erste Gehäuseteil, das zweite Gehäuseteil und/oder zumindest ein Einzelelement, insbesondere das erste Einzelelement, das zweite Einzelelement, das dritte Einzelelement und/oder das vierte Einzelelement, insbesondere auf zumindest einer ersten Oberfläche und/oder im Bereich zumindest einer Endkante, zumindest ein erstes Verankerungselement umfaßt bzw. umfassen, wobei vorzugsweise zumindest eine zweite Oberfläche des ersten Verankerungselementes zumindest bereichsweise, insbesondere vollständig, von dem Duroplastkörper oder dem Thermoplastkörper bedeckt ist.

Weiterhin wird mit der Erfindung vorgeschlagen, daß, insbesondere bei Umspritzung des ersten Gehäuseteils und des zweiten Gehäuseteils mit dem Duroplastkörper, das erste Gehäuseteil, das zweite Gehäuseteil, zumindest ein Einzelelement, insbesondere das erste Einzelelement, das zweite Einzelelement, das dritte Einzelelement und/oder das vierte Einzelelement, der Thermoplastkörper und/oder der Duroplastkörper, zumindest teilweise, von zumindest einem Thermoplast haubenartig überdeckt ist bzw. sind.

Auch ist bevorzugt, daß auf zumindest einer dritten Oberfläche des ersten Gehäuseteils, des zweiten Gehäuseteils, zumindest eines Einzelelements, insbesondere des ersten Einzelelements, des zweiten Einzelelements, des dritten Einzelelements und/oder des vierten Einzelelements, und/oder des Duroplastkörpers zumindest ein zweites Verankerungselement ausgebildet ist, wobei vorzugsweise zumindest eine vierte Oberfläche des zweiten Verankerungselementes zumindest bereichsweise, insbesondere vollständig, von dem Thermoplast oder dem Thermoplastkörper bedeckt ist.

Für das Kunststoffverdichtergehäuse wird auch bevorzugt, daß das erste Gehäuseteil, das zweite Gehäuseteil, zumindest ein Einzelelement, insbesondere das erste Einzelelement, das zweite Einzelelement, das dritte Einzelelement und/oder das vierte Einzelelement, der Duroplastkörper, der Thermoplastkörper und/oder das Thermoplast zumindest bereichsweise zumindest einen Fluidansaugstutzen, insbesondere Luftansaugstutzen, zumindest einen Verdichterkanal und/oder zumindest bereichsweise zumindest einen Fluidaustrittsstutzen, insbesondere Luftaustrittsstutzen, bereitstellt bzw. bereitstellen.

Weiterhin sieht die Erfindung vor, daß zumindest ein mit dem Fluidansaugstutzen, dem Verdichterkanal und/oder dem Fluidaustrittsstutzen verbindbares erstes Fluidleitelement, insbesondere umfassend zumindest ein Fluidfilterelement, zumindest ein Leitungselement, wie ein Fluidrohr, und/oder zumindest ein Dämpfungselement, wie einen Ladeluftdämpfer, zumindest bereichsweise von dem Thermoplastkörper oder dem Thermoplast überdeckt ist, wobei vorzugsweise auf zumindest einer, insbesondere von dem Thermoplastkörper oder dem Thermoplast zumindest bereichsweise überdeckten, fünften Oberfläche des ersten Fluidleitelements zumindest ein drittes Verankerungselement ausgebildet ist und/oder zumindest eine, insbesondere von dem Thermoplast zumindest bereichsweise überdeckte, Oberfläche des Fluidansaugstutzens, des Verdichterkanals und/oder des Fluidaustrittsstutzens die erste Oberfläche bildet.

Bei dieser Ausführungsform ist bevorzugt vorgesehen, daß das erste Fluidleitelement zumindest bereichsweise einen Kunststoff und/oder ein Metall umfaßt.

Weiterhin kann ein erfindungemäßes Kunststoffverdichtergehäuse dadurch gekennzeichnet sein, daß zumindest eine erste Vertiefung in dem ersten Gehäuseteil, dem zweiten Gehäuseteil, zumindest einem Einzelelement, insbesondere dem ersten Einzelelement, dem zweiten Einzelelement, dem dritten Einzelelement und/oder dem vierten Einzelelement, und/oder dem Duroplastkörper ausgebildet ist, wobei vorzugsweise zumindest eine, insbesondere dem Verdichterkanal zugewandte, Wandung der ersten Vertiefung zumindest bereichsweise mit dem Thermoplast oder dem Thermoplastkörper bedeckt ist.

Bei dieser Ausführungsform ist bevorzugt, daß die erste Vertiefung zumindest bereichsweise benachbart zu dem Verdichterkanal und/oder zumindest bereichsweise zwischen dem Verdichterkanal und dem Fluidansaugstutzen angeordnet ist.

Weiterhin schlägt die Erfindung vor, daß das erste Gehäuseteil, das zweite Gehäuseteil, zumindest ein Einzelelement, insbesondere das erste Einzelelement, das zweite Einzelelement, das dritte Einzelelement und/oder das vierte Einzelelement, der Duroplastkörper, der Thermoplast, der Thermoplastkörper und/oder das erste Fluidleitelement mit zumindest einem dritten Gehäuseteil verbindbar ist bzw. sind.

Bei der letztgenannten Alternative wird mit der Erfindung auch vorgeschlagen, daß das erste Gehäuseteil, das zweite Gehäuseteil, das dritte Gehäuseteil zumindest teilweise zumindest eine Funktionskomponente des Kunststoffverdichtergehäuses und/oder eines das Kunststoffverdichtergehäuse umfassenden Verdichters umfaßt, insbesondere zumindest bereichsweise den Fluidansaugstutzen, zumindest ein erstes Verbindungselement zur Verbindung zumindest eines zweiten Fluidleitelements, wie eines Fluid- und/oder Luftschlauchs, mit dem Fluidansaugstutzen, zumindest bereichsweise den Fluidaustrittsstutzen, zumindest ein zweites Verbindungselement zur Verbindung zumindest eines dritten Fluidleitelements, wie eines Fluid-und/oder Luftschlauchs, mit dem Fluidaustrittsstutzen, zumindest eine, insbesondere in fluidaler Verbindung mit dem Fluidansaugstutzen, dem Verdichterkanal und/der dem Fluidaustrittsstutzen stehende, Verbindungsleitung und/oder zumindest eine, insbesondere mit der Verbindungsleitung in Wirkverbindung stehende, Ventilvorrichtung umfaßt und/oder zumindest eine Steuerdose, vorzugsweise zur Steuerung eines Druckes innerhalb des Verdichters, umfaßt.

Die vorgenannte Ausführungsform der Erfindung kann auch dadurch gekennzeichnet sein, daß mittels der Verbindungsleitung eine zumindest indirekte fluidale Verbindung zwischen dem Fluidansaugstutzen und dem Fluidaustrittsstutzen, dem Verdichterkanal und dem Fluidansaugstutzen, dem Verdichterkanal und dem Fluidaustrittsstutzen und/oder einer Umgebungsatmosphäre einerseits und dem Fluidansaugstutzen, dem Verdichterkanal und/oder dem Fluidaustrittsstutzen andererseits herstellbar ist, wobei vorzugsweise die Verbindung mittels der Ventilvorrichtung steuer- und/oder regelbar ist, insbesondere die Ventilvorrichtung in Form eines Schubumluftventils ausgebildet ist.

Weiterhin schlägt die Erfindung für die drei vorgenannten alternativen Ausführungsformen vor, daß das dritte Gehäuseteil zumindest bereichsweise ein, insbesondere glasfaserverstärktes, Thermoplastmaterial und/oder Duroplastmaterial umfaßt, vorzugsweise im wesentlichen vollständig aus einem, insbesondere glasfaserverstärkten, Thermoplastmaterial und/oder Duroplastmaterial besteht.

Auch kann dabei vorgesehen sein, daß das dritte Gehäuseteil mit dem ersten Gehäuseteil, dem zweiten Gehäuseteil, zumindest einem Einzelelement, insbesondere dem ersten Einzelelement, dem zweiten Einzelelement, dem dritten Einzelelement und/oder dem vierten Einzelelement, dem Duroplastkörper, dem Thermoplastkörper und/oder dem Thermoplast mittels zumindest eines dritten Verbindungselementes verbindbar ist.

Alternative Ausführungsformen des Kunststoffverdichtergehäuses können ferner vorsehen, daß das dritte Verbindungselement zumindest eine in dem ersten Gehäuseteil, dem zweiten Gehäuseteil, zumindest einem Einzelelement, insbesondere dem ersten Einzelelement, dem zweiten Einzelelement, dem dritten Einzelelement und/oder dem vierte Einzelelement, dem Duroplastkörper, dem Thermoplastkörperund/oder dem Thermoplast ausgebildete zweite Vertiefung umfaßt und in der zweiten Vertiefung zumindest ein Bereich des dritten Gehäuseteils aufnehmbar ist, wobei vorzugsweise die zweite Vertiefung der ersten Vertiefung entspricht.

Auch wird dabei vorgeschlagen, daß das dritte Verbindungselement zumindest ein in dem ersten Gehäuseteil, dem zweiten Gehäuseteil, zumindest einem Einzelelement, insbesondere dem ersten Einzelelement, dem zweiten Einzelelement, dem dritten Einzelelement und/oder dem vierten Einzelelement, dem Duroplastkörper, dem Thermoplastkörper und/oder dem Thermoplast ausgebildetes erstes Befestigungsmittel umfaßt, wobei zumindest ein Befestigungselement mit dem ersten Befestigungsmittel in Wechselwirkung bringbar ist, insbesondere mit dem ersten Befestigungsmittel verbindbar ist und das dritte Gehäuseteil ein mit dem Befestigungselement in Wechselwirkung bringbares, insbesondere mit dem Befestigungselement verbindbares, zweites Befestigungsmittel umfaßt.

Mit der Erfindung wird auch beansprucht, daß das erste Befestigungsmittel zumindest eine erste Öffnung und/oder eine erste Halterung in dem ersten Gehäuseteil, dem zweiten Gehäuseteil, zumindest einem Einzelelement, insbesondere dem ersten Einzelelement, dem zweiten Einzelelement, dem dritten Einzelelement und/oder dem vierten Einzelelement, dem Duroplastkörper, dem Thermoplastkörper und/oder Thermoplast umfaßt und das zweite Befestigungsmittel eine zweite, insbesondere mit der ersten Öffnung fluchtende, zweite Öffnung und/oder zweite Halterung in dem dritten Gehäuseteil umfaßt, insbesondere das Befestigungselement in die erste Öffnung und die zweite Öffnung zumindest bereichsweise einbringbar ist, wobei insbesondere die erste und/oder die zweite Öffnung und/oder die erste und/oder die zweite Halterung zumindest eine Bohrung, zumindest ein Loch, zumindest ein Sackloch und/oder zumindest ein Gewinde umfaßt bzw. umfassen und/oder das Befestigungselement zumindest eine Nietverbindung, Schraubverbindung, Rastverbindung, Steckverbindung, Adhäsionsverbindung und/oder Klipsverbindung umfaßt, wobei vorzugsweise das Gewinde durch Verbindung des Befestigungselements, insbesondere in Form einer selbstschneidenden Schraube, ausbildbar ist.

Dabei ist besonders bevorzugt, daß das dritte Gehäuseteil im Bereich des dritten Verbindungselementes, insbesondere im Bereich des ersten Befestigungsmittels und/oder des zweiten Befestigungsmittels, direkt mit dem ersten Gehäuseteil, dem zweiten Gehäuseteil, dem ersten Einzelelement, dem zweiten Einzelelement, dem dritten Einzelelement, dem vierten Einzelelement und/oder dem Duroplastkörper in Kontakt steht.

Weiterhin kann vorgesehen sein, daß das erste Gehäuseteil mit dem zweiten Gehäuseteil, insbesondere zumindest ein Einzelelement des ersten Gehäuseteils, vorzugsweise das erste Einzelelement und/oder das zweite Einzelelement, mit zumindest einem Einzelelement des zweiten Gehäuseteils, vorzugsweise dem dritten Einzelelement und/oder dem vierten Einzelelement, mittels zumindest eines vierten Verbindungselements verbindbar ist.

Insbesondere wird mit der Erfindung auch vorgeschlagen, daß zumindest zwei Einzelelemente des ersten Gehäuseteils, insbesondere das erste Einzelelement und das zweite Einzelelement, mittels zumindest eines fünften Verbindungselementes miteinander verbindbar sind und/oder zumindest zwei Einzelelemente des zweiten Gehäuseteils, insbesondere das dritte Einzelelement und das vierte Einzelelement, mittels zumindest eines sechsten Verbindungselementes miteinander verbindbar sind.

Bei den beiden vorgenannten Alternativen ist es ferner vorteilhaft, wenn das vierte Verbindungselement, das fünfte Verbindungselement und/oder das sechste Verbindungselement zumindest eine Nietverbindung, zumindest eine Schraubverbindung, zumindest eine Klipsverbindung, zumindest eine Rastverbindung, zumindest eine Feder/Nut-Verbindung, zumindest eine Steckverbindung und/oder zumindest eine Adhäsionsverbindung umfaßt.

Auch wird mit der Erfindung vorgeschlagen, daß das erste Verankerungselement, das zweite Verankerungselement und/oder das dritte Verankerungselement zumindest eine Vertiefung, wie zumindest einen Hinterschnitt und/oder zumindest eine Nut, zumindest eine Erhebung, wie zumindest einen Steg, zumindest einen Oberflächenbereich mit einer im Vergleich zu der im wesentlichen restlichen ersten, zweiten, dritten und/oder vierten Oberfläche erhöhten Oberflächenrauhigkeit und/oder zumindest eine Durchbrechung der ersten, zweiten, dritten und/oder vierten Oberfläche umfaßt, wobei vorzugsweise die Vertiefung und/oder die Durchbrechung im wesentlichen vollständig mit dem Duroplastkörper, dem Thermoplastkörper und/oder dem Thermoplast aufgefüllt ist, der Steg im wesentlichen allseitig von dem Duroplastkörper, dem Thermoplast und/oder dem Thermoplast bedeckt ist und/oder der Oberflächenbereich im wesentlichen vollständig von dem Duroplastkörper, dem Thermoplastkörper und/oder dem Thermoplast bedeckt ist.

Weiterhin kann ein erfindungsgemäßes Kunststoffverdichtergehäuse gekennzeichnet sein durch zumindest ein von dem ersten Gehäuseteil umfaßtes erstes Abdichtelement, zumindest ein von dem zweiten Gehäuseteil umfaßtes zweites Abdichtelement, zumindest ein von dem dritten Gehäuseteil umfaßtes drittes Abdichtelement, zumindest ein von dem ersten Einzelelement umfaßtes viertes Abdichtelement, zumindest ein von dem zweiten Einzelelement umfaßtes fünftes Abdichtelement, zumindest ein von dem dritten Einzelelement umfaßtes sechstes Abdichtelement und/oder zumindest ein von dem vierten Einzelelement umfaßtes siebtes Abdichtelement, wobei vorzugsweise das erste Abdichtelement, das zweite Abdichtelement, das dritte Abdichtelement, das vierte Abdichtelement, das fünfte Abdichtelement, das sechste Abdichtelement und/oder das siebte Abdichtelement zumindest teilweise im Bereich zumindest einer Kontaktfläche des ersten Gehäuseteils, des zweiten Gehäuseteils, des dritten Gehäuseteils, des ersten Einzelelements, des zweiten Einzelelements, des dritten Einzelelements, und/oder des vierten Einzelelements mit dem ersten Gehäuseteil, dem zweiten Gehäuseteil, dem dritten Gehäuseteil, dem ersten Einzelelement, dem zweiten Einzelelement, dem dritten Einzelelement, dem vierten Einzelelement, dem Duroplastkörper, dem Thermoplastkörper und/oder dem Thermoplast angeordnet ist bzw. sind.

Schließlich wird bei dieser Ausführungsform mit der Erfindung vorgeschlagen, daß erste Abdichtelement, das zweite Abdichtelement, das dritte Abdichtelement, das vierte Abdichtelement, das fünfte Abdichtelement, das sechste Abdichtelement und/oder das siebte Abdichtelement zumindest eine Vertiefung, insbesondere zur Aufnahme zumindest eines Dichtungselementes, wie eines O-Rings und/oder zumindest einer Dichtungsmasse, vorzugsweise zumindest bereichsweise umfassend Silikon, umfaßt bzw. umfassen.

Die das Verfahren betreffende Aufgabe wird gelöst durch ein Verfahren zur Herstellung eines Kunststoffverdichtergehäuses, bei dem ein zumindest bereichsweise Duroplast umfassendes erstes Gehäuseteil und zumindest ein zumindest bereichsweise Duroplast umfassendes zweites Gehäuseteil bereitgestellt werden, wobei das erste Gehäuseteil und/oder das zweite Gehäuseteil zumindest zwei Einzelelemente umfaßt bzw. umfassen, wobei die Einzelelemente des ersten Gehäuseteils zur Bildung des ersten Gehäuseteils und/oder die Einzelelemente des zweiten Gehäuseteils zur Bildung des zweiten Gehäuseteils relativ zueinander angeordnet werden, das erste Gehäuseteil und das zweite Gehäuseteil relativ zueinander angeordnet werden und das erste und das zweite Gehäuseteil und die Einzelelemente miteinander verbunden werden indem das erste Gehäuseteil und das zweite Gehäuseteil mit zumindest einem Duroplastkörper oder zumindest einem Thermoplastkörper umspritzt werden.

Dabei ist bevorzugt, daß das erste Gehäuseteil, das zweite Gehäuseteil, zumindest ein Einzelelement, der Thermoplastkörper und/oder der Duroplastkörper, insbesondere bei Verbindung des ersten Gehäuseteils und des zweiten Gehäuseteils und der Einzelelemente durch Umspritzung mit dem Duroplastkörper, zumindest teilweise, mit zumindest einem Thermoplast haubenartig überdeckt wird bzw. werden, wobei vorzugsweise zumindest eine Wandung zumindest einer in dem ersten Gehäuseteil, dem zweiten Gehäuseteil und/oder zumindest einem Einzelelement ausgebildeten Vertiefung zumindest bereichsweise mit dem Thermoplast bedeckt wird.

Bei den beiden vorgenannten alternativen Ausführungsformen wird mit der Erfindung vorgeschlagen, daß auf zumindest einer ersten Oberfläche und/oder im Bereich zumindest einer Endkante des ersten Gehäuseteils, des zweiten Gehäuseteils und/oder zumindest eines Einzelelementes, insbesondere während der Herstellung des ersten Gehäuseteils, des zweiten Gehäuseteils und/oder des Einzelelementes zumindest ein erstes Verankerungselement ausgebildet wird, wobei vorzugsweise zumindest eine zweite Oberfläche des ersten Verankerungselementes zumindest bereichsweise, insbesondere vollständig, von dem Duroplastkörper oder dem Thermoplastkörper bedeckt wird.

Auch ist bevorzugt, daß auf zumindest einer dritten Oberfläche des ersten Gehäuseteils, des zweiten Gehäuseteils, zumindest eines Einzelelements und/oder des Duroplastkörpers zumindest ein zweites Verankerungselement ausgebildet wird, wobei vorzugsweise zumindest eine vierte Oberfläche des zweiten Verankerungselements zumindest bereichsweise, insbesondere vollständig, von dem Thermoplastkörper oder dem Thermoplast bedeckt wird.

Weiterhin kann das erfindungsgemäße Verfahren dadurch gekennzeichnet sein, daß zumindest ein erstes Fluidleitelement mit zumindest einem Fluidansaugstutzen, zumindest einem Verdichterkanal und/oder zumindest einem Fluidaustrittsstutzen des Kunststoffverdichtergehäuses verbunden wird, wobei das erste Fluidleitelement zumindest bereichsweise von dem Thermoplastkörper oder dem Thermoplast überdeckt wird.

Besonders bevorzugt ist, daß zumindest ein drittes Gehäuseteil, insbesondere mittels zumindest eines Befestigungselementes, mit dem ersten Gehäuseteil, dem zweiten Gehäuseteil, zumindest einem Einzelelement, dem Thermoplastkörper und/oder dem Duroplastkörpers verbunden wird, wobei das dritte Gehäuseteil vorzugsweise zumindest bereichsweise in zumindest einer zweiten Vertiefung, insbesondere der ersten Vertiefung, aufgenommen wird.

Auch wird für das erfindungsgemäße Verfahren vorgeschlagen, daß in dem ersten Gehäuseteil zumindest ein erstes Abdichtelement, in dem zweiten Gehäuseteil zumindest ein zweites Abdichtelement, in dem dritten Gehäuseteil zumindest ein drittes Abdichtelement und/oder in zumindest einem Einzelelement zumindest ein viertes Abdichtelement ausgebildet wird.

Schließlich schlägt die Erfindung für das Verfahren vor, daß das erste Gehäuseteil und das zweite Gehäuseteil mittels zumindest eines vierten Verbindungselementes, zumindest zwei Einzelelemente des ersten Gehäuseteils mittels zumindest eines fünften Verbingungselementes, zumindest zwei Einzelelemente des zweiten Gehäuseteils und/oder zumindest ein Einzelelement des ersten Gehäuseteils und zumindest ein Einzelelement des zweiten Gehäuseteils miteinander verbunden werden, insbesondere vor einer Umspritzung mit dem Duroplastkörper, dem Thermoplastkörper und/oder dem Thermoplast.

Auch liefert die Erfindung einen Turbolader umfassend ein erfindungsgemäßes Kunststoffverdichtergehäuse.

Der vorliegenden Erfindung liegt die überraschende Erkenntnis zugrunde, daß dadurch, daß das Kunststoffverdichtergehäuse aus zumindest zwei Gehäuseteilen besteht, wobei zumindest eines dieser Gehäuseteile zumindest zweiteilig ausgebildet ist, Verdichtergehäuse mit einer hohen Bauteilkomplexität, in der insbesondere mehrfache Hinterschnitte vorgesehen sein können, hergestellt werden können, wobei durch die Ausbildung der Gehäuseteile bzw. der Einzelelementen des ersten und zweiten Gehäuseteils aus einem Duroplast ein geschlossener Integralkörper gebildet werden kann, der in einem Spritzgießwerkzeug durch Umspritzung mit dem Duroplastkörper in eine feste Bauteilgeometrie umgewandelt werden kann, so daß das Verdichtergehäuse höchsten Stabilitätsanforderungen entspricht. So führt die Umspritzung mit dem Duroplast zur Bildung eines Gehäuses, bei dem die Einzelelemente mechanisch durch Kraft- und/oder Formschluß miteinander verbunden sind, wobei durch Verwendung gleicher Materialen für die Einzelkomponente als auch die Umspritzung in Abhängigkeit von den Verfahrensparametern der Umspritzung auch eine chemische Verbindung zwischen den Einzelkomponenten erfolgen kann. Der so gebildete integrale Duroplastkörper kann vorzugsweise in einem weiteren Schritt haubenartig von einem Thermoplast umgeben werden um eine weitere Erhöhung der Bauteilstabilität, insbesondere unter Extrembedingungen, zu erreichen. Diese Kombination aus einer hohen Bauteilkomplexität mit extrem hohen Stabilitätseigenschaften kann alternativ auch dadurch erreicht werden, daß das erste und das zweite Gehäuseteil, die aus einem Duroplast bestehen, verliersicher miteinander verbunden werden, beispielsweise über eine Schraub- oder eine Klipsverbindung, und das erste und zweite Gehäuseteil anschließend direkt mit einem Thermoplastkörper zumindest bereichsweise umspritzt werden. Aufgrund der Tatsache, daß auf eine zusätzliche Umspritzung der Duroplasteinzelkomponenten mit einem Duroplastkörper verzichtet werden kann, wird der Herstellungsprozeß des Kunststoffverdichtergehäuses weiter vereinfacht.

Üblicherweise werden Verdichtergehäuse mit einer derart hohen Bauteilkomplexität aus wirtschaftlichen Gründen durch metallische Verdichtergehäuse bereitgestellt, die üblicherweise im Aluminiumsandgußverfahren hergestellt sind. Das erfindungsgemäße Kunststoffverdichtergehäuse bzw. das erfindungsgemäße Verfahren ermöglicht es, eine zu diesen metallischen Verdichtergehäuse äquivalente Ausführungsform in Form eines Kunststoffverdichtergehäuses bereitzustellen. Somit wird ein integrales Bauteil aus mehreren konstruktiv einfachen Einzelteilen, die für sich jeweils leicht entformbar sind und mit konventioneller Spritztechnik und damit kostengünstig herstellbar sind, bereitgestellt, wobei durch Zusammenlegen der Einzelbauteile nach einem vorgegebenen Prinzip mit vordefinierten Schnittstellen ein Integralkörper bereitgestellt wird, der in einem Spritzgießwerkzeug durch Umspritzung mit einem Duroplastkörper oder einem Thermoplastkörper in ein festes, d.h. eine hohe Stabilität aufweisendes, Bauteil überführt werden kann. Somit liefert die Erfindung ein Kunststoffverdichtergehäuse sowie ein Verfahren zur Herstellung eines Kunststoffverdichtergehäuses, welches die Herstellung üblicherweise aufgrund unwirtschaftlicher Fertigungstechnologien in Kunststoff nicht herstellbarer Bauteile mit einem hohen Integrationsgrad und niedrigen Herstellungskosten ermöglicht. Weiterhin ermöglicht es der mehrteilige Aufbau des Kunststoffverdichtergehäuses, daß einzelne Einzelteile modular nach Art eines Baukastens miteinander beliebig kombiniert werden können, um das Kunststoffverdichtergehäuse an die jeweiligen Erfordernisse anpassen zu können, ohne Festigkeitsnachteile befürchten zu müssen. Daraus resultieren auch weitere Kostenreduktionen, da nur unterschiedliche Einzelkomponenten und nicht komplette Kunststoffverdichtergehäuse für unterschiedliche Anforderungsprofile vorgehalten werden müssen.

Weitere Merkmale und Vorteile der Erfindung ergeben sich aus nachfolgenden Beschreibung, in der Ausführungsbeispiele der Erfindung anhand schematischer Zeichnungen beispielhaft erläutert sind.

Dabei zeigt:
- Figur 1: eine perspektivische Aufsicht auf ein erfindungsgemäßes Kunststoffverdichtergehäuse gemäß einer ersten Ausführungsform;
- Figur 2: eine Aufsicht auf die Unterseite des Kunststoffverdichtergehäuses der Figur 1;
- Figur 3: eine perspektivische Aufsicht auf die Unterseite des Kunststoffverdichtergehäuses der Figur 1;
- Figur 4: eine Seitenansicht auf das Kunststoffverdichtergehäuse der Figur 1;
- Figur 5: eine Aufsicht auf die Oberseite des Kunststoffverdichtergehäuses der Figur 1;
- Figur 6: eine Querschnittsansicht des Kunststoffverdichtergehäuses entlang der Schnittlinie A-A der Figur 5;
- Figur 7: eine Detailansicht des Ausschnitts B der Figur 6;
- Figur 8: eine Detailansicht des Ausschnitts C in Figur 6;
- Figur 9: eine Querschnittsansicht entlang der Schnittlinie D-D der Figur 5;
- Figur 10: eine Querschnittsansicht entlang der Linie E-E der Figur 5;
- Figur 11: eine Detailansicht des Ausschnitts F der Figur 9;
- Figur 12: eine perspektivische Aufsicht auf ein Innenteils einer zweiten Ausführungsform eines erfindungsgemäßen Kunststoffverdichtergehäuses;
- Figur 13: eine perspektivische Aufsicht auf das Innenteil der Figur 12 in Kombination mit einer Unterschale;
- Figur 14: eine perspektivische Aufsicht auf das Innenteil und die Unterschale der Figur 13 nach Verbindung mit einer Oberschale;
- Figur 15: eine perspektivische Aufsicht auf die Elemente der Figur 14 nach Umspritzung mit einem Duroplastkörper;
- Figur 16: eine perspektivische Aufsicht auf die in Figur 15 dargestellten Elemente nach haubenartiger Bedeckung mit einem Thermoplast;
- Figur 17: eine Aufsicht auf das Kunststoffverdichtergehäuse der Figur 16 nach Anbringung eines dritten Gehäuseteils;
- Figur 18: eine Querschnittsansicht des Kunststoffverdichtergehäuses der Figur 17;
- Figur 19: eine perspektivische Aufsicht auf ein erfindungsgemäßes Kunststoffverdichtergehäuse gemäß einer dritten Ausführungsform;
- Figur 20: eine Aufsicht auf die Unterseite des Kunststoffverdichtergehäuses der Figur 19;
- Figur 21: eine perspektivische Aufsicht auf die Unterseite des Kunststoffverdichtergehäuses der Figur 19;
- Figur 22: eine Seitenansicht auf das Kunststoffverdichtergehäuse der Figur 19;
- Figur 23: eine Aufsicht auf die Oberseite des Kunststoffverdichtergehäuses der Figur 19;
- Figur 24: eine Querschnittsansicht des Kunststoffverdichtergehäuses der Figur 19 entlang der Schnittlinie G-G der Figur 23;
- Figur 25: eine Detailansicht des Ausschnitts H der Figur 24;
- Figur 26: eine Detailansicht des Ausschnitts I der Figur 24;
- Figur 27: eine Querschnittsansicht des Kunststoffverdichtergehäuses der Figur 19 entlang der Schnittlinie J-J der Figur 23;
- Figur 28: eine Detailansicht des Ausschnitts K der Figur 27; und
- Figur 29: eine Querschnittsansicht des Kunststoffverdichtergehäuses der Figur 19 entlang der Schnittlinie L-L der Figur 23.

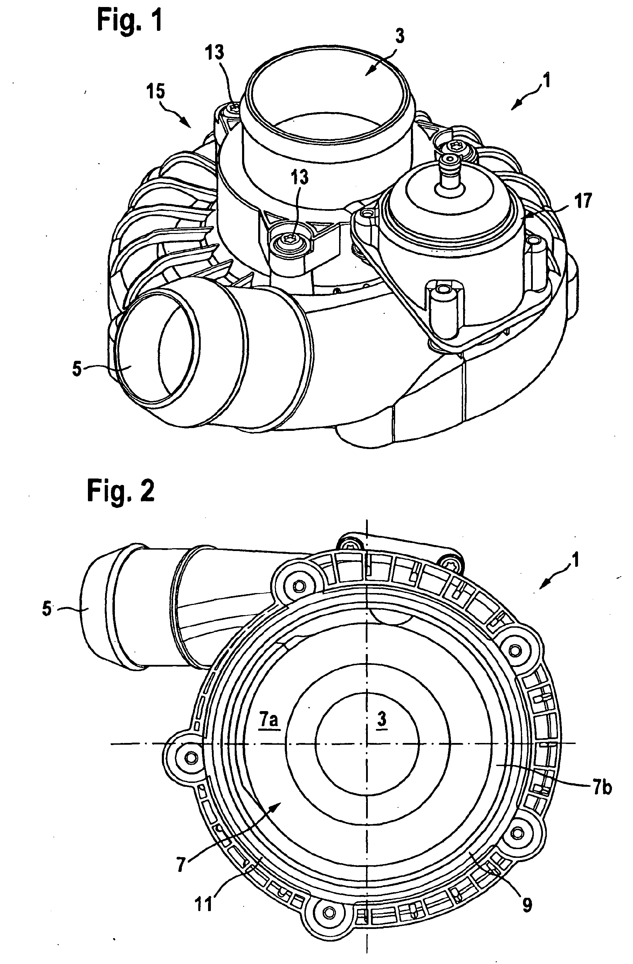

Figur 1 zeigt eine perspektivische Aufsicht auf ein Kunststoffverdichtergehäuse 1. Das Kunststoffverdichtergehäuse 1 weist einen Fluidansaugstutzen in Form eines Luftansaugstutzens 3 auf. Die über den Luftansaugstutzen 3 angesaugte Luft kann über ein nicht dargestelltes Radialverdichterrad komprimiert werden und tritt über einen Fluidaustrittsstutzen in Form eines Luftaustrittsstutzens 5 aus dem Kunststoffverdichtergehäuse 1 aus. Wie insbesondere aus Figur 2, die eine Aufsicht auf die Unterseite des Kunststoffverdichtergehäuses 1 darstellt, ersichtlich, besteht das Kunststoffverdichtergehäuse 1 aus einem ersten Gehäuseteil 7, welches durch ein erstes Einzelelement in Form eines Innenteils 7a und ein zweites Einzelelement in Form einer Oberschale 7b gebildet ist, und einem zweiten Gehäuseteil, welches einteilig in Form einer Unterschale 9 ausgebildet ist. Wie später erläutert werden wird, bilden diese Gehäuseteile 7, 7a, 7b, 9 durch Umspritzung mit einem Duroplastkörper 11 ein integrales Bauteil mit hoher Strukturfestigkeit.

Mittels Befestigungselementen in Form von Schrauben 13, die insbesondere als selbstschneidende Schrauben ausführbar sind und die in erste Befestigungsmittel in Form von in dem Duroplastkörper 11 ausgebildeten Sackbohrungen eingreifen, ist ein drittes Gehäuseteil 15, welches auch als Aufsatz bezeichnet wird, auf dem durch das Gehäuseteil 7, die Unterschale 9 und den Duroplastkörper 11 gebildete Bauteil befestigt. Wie Figur 1 zu entnehmen ist, wird durch das dritte Gehäuseteil 15 ein erstes Verbindungselement zur Verbindung des Luftansaugstutzens 3 mit einem nicht dargestellten Luftansaugschlauch bereitgestellt. Weiterhin wird durch das dritte Gehäuseteil 15 eine Ventilanordnung in Form eines Schubumluftventils 17, dessen Funktion später detailliert erläutert wird, in dem Kunststoffverdichtergehäuse 1 bereitgestellt.

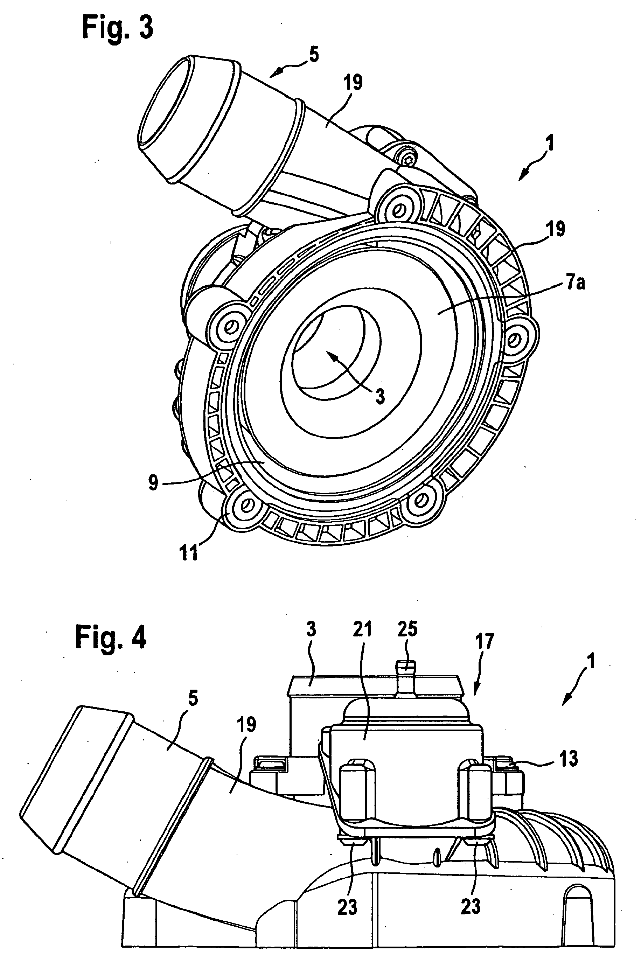

In Figur 3 ist eine perspektivische Aufsicht auf die Unterseite des Kunststoffverdichtergehäuses 1 dargestellt. Wie insbesondere Figur 3 zu entnehmen ist, ist der Duroplastkörper 11 und damit auch das erste Gehäuseteil 7 und das zweite Gehäuseteil 9 des Kunststoffverdichtergehäuses 1 haubenartig durch ein Thermoplast 19 bedeckt. Dieses Thermoplast 19 wird insbesondere durch Umspritzung erzeugt. Durch das Thermoplast 19 wird sichergestellt, daß bei extremen Belastungen, wie sie insbesondere bei einem Containment-Test auftreten können, eine größtmögliche Sicherheit des Kunststoffverdichtergehäuses 1 sichergestellt ist. So kann es bei extremen Belastungen zu einer Zerstörung der Integrität des aus Duroplast bestehenden Gehäuseteils 7, der Unterschale 9 und des Duroplastkörpers 11 kommen, beispielsweise wenn ein in dem Kunststoffverdichtergehäuse 1 rotierendes Radialverdichterrad in Kontakt mit dem ersten Gehäuseteil 7 oder der Unterschale 9 kommt. Durch das Thermoplast 19 ist in einem solchen Fall sichergestellt, daß keine Bruchstücke des Gehäuseteils 7, des Innenteils 7a, der Oberschale 7b, der Unterschale 9 oder des Duroplastkörpers 11 aus dem Kunststoffverdichtergehäuse 1 austreten können.

In Figur 4 ist eine Seitenansicht des Kunststoffverdichtergehäuses 1 der Figuren 1 bis 3 dargestellt. Wie Figur 4 zu entnehmen ist, weist das Schubumluftventil 17 einen Deckel 21 auf, welcher über Schrauben 23 an dem dritten Gehäuseteil 15 befestigt ist. Der Deckel 21 und/oder das dritte Gehäuseteil 15 umfaßt bzw. umfassen vorzugsweise ein glasfaserverstärktes Thermoplastmaterial. An dem Deckel 21 ist ferner ein Anschlußstutzen 25 zum Anschluß einer nicht dargestellten Unterdruckversorgung angeordnet.

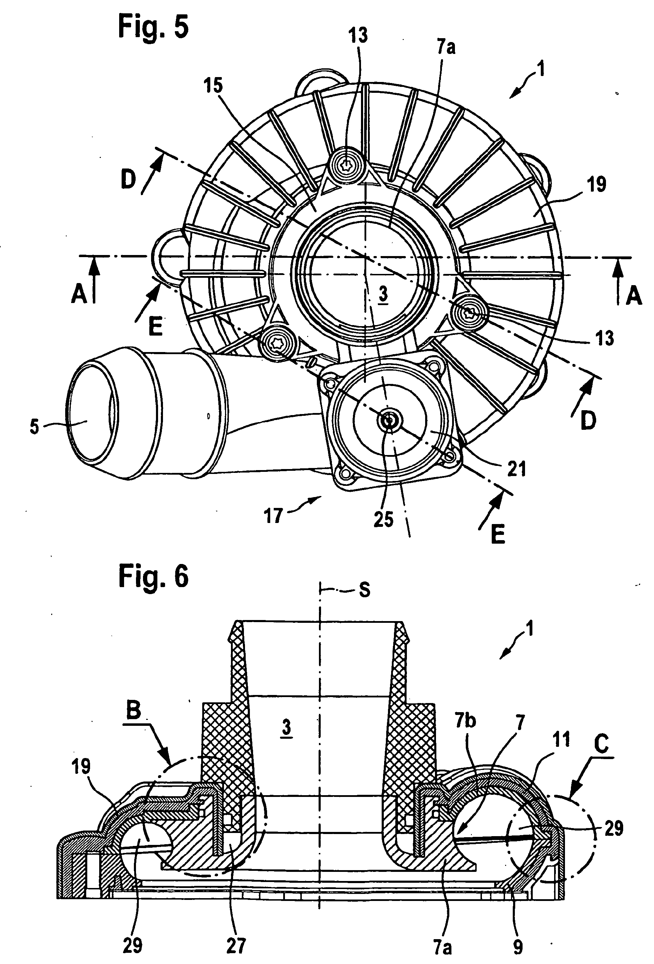

Figur 5 zeigt eine Aufsicht auf die Oberseite des Kunststoffverdichtergehäuses 1 der Figuren 1 bis 4. Die Bezugszeichen entsprechen denjenigen der Figuren 1 bis 4.

In Figur 6 ist eine Querschnittsansicht des Kunststoffverdichtergehäuses 1 entlang der Schnittlinie A-A der Figur 5 dargestellt. Der Figur 6 sind insbesondere die relativen Positionen des ersten Gehäuseteils 7, welches durch ein Innenteil 7a und eine Oberschale 7b gebildet wird, und des zweiten Gehäuseteils, welches durch die Unterschale 9 gebildet wird, zu entnehmen. Weiterhin ist Figur 6 zu entnehmen, daß das Gehäuseteil 7 und die Unterschale 9, die jeweils aus einem Duroplastwerkstoff bestehen, mit dem Duroplastkörper 11 umspritzt sind. Der Duroplastkörper 11 wird haubenartig von dem Thermoplast 19 umgeben.

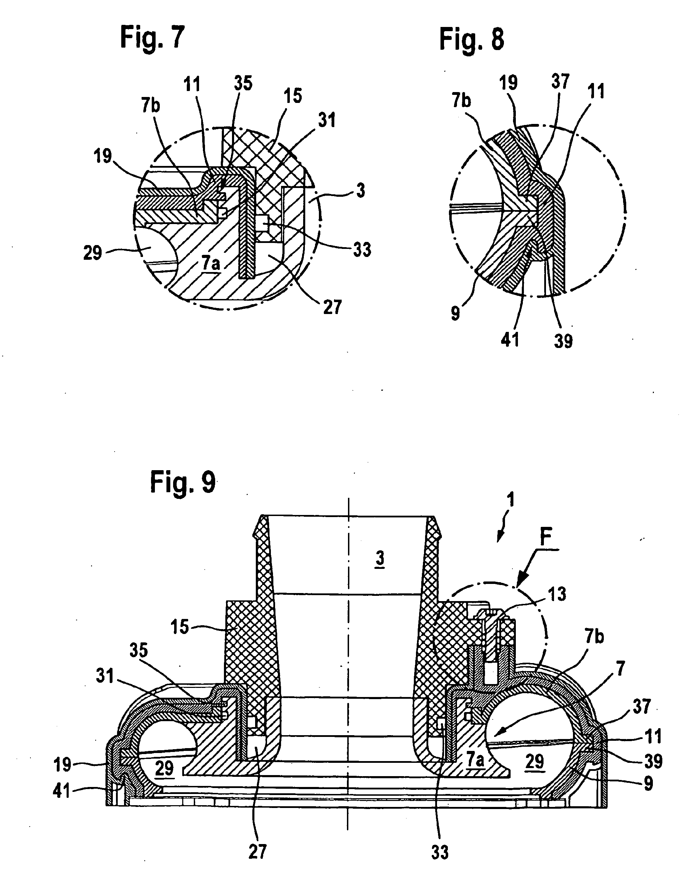

Wie der Figur 6 weiter zu entnehmen ist, ist das Innenteil 7a von seiner Kontur her so ausgebildet, daß eine erste Vertiefung 27 in dem Innenteil 7a ausgebildet wird. Wie insbesondere Figur 7, die eine Detailansicht des Ausschnitts B der Figur 6 darstellt, zu entnehmen ist, reicht die Umspritzung des Gehäuseteils 7 in Form des Duroplastkörpers 11 in die Vertiefung 27 hinein. Darüber hinaus reicht auch das Thermoplast 19 in die Vertiefung 27 hinein. Wie insbesondere in Figur 6 gezeigt ist, führt diese Ausdehnung des Thermoplast 19 zur Ausbildung einer sogenannten Doppelbariere. Dies bedeutet, daß ein Durchtritt von Bruchstücken eines nicht dargestellten Radialverdichterrads aus einem Verdichterkanal durch den Duroplastwerkstoff in Form des Innenteils 7a, der Oberschale 7b, der Unterschale 9 bzw. des Duroplastkörpers 11 sowohl in Richtung einer Symmetrieachse S des Kunststoffverdichtergehäuses 1 als auch in eine Richtung von der Symmetrieachse S radial nach Außen an dem Thermoplast 19 gestoppt wird. Gleichermaßen werden Duroplastbruchstücke daran gehindert aus Richtung des Verdichterkanals 29 durch das Innenteils 7a in den Luftansaugstutzen 3 hinein zu treten. Dadurch wird die Sicherheit des Kunststoffverdichtergehäuses 1 auch in dem Fall, in dem die strukturelle Integrität eines der Duroplastelemente des Kunststoffverdichtergehäuses 1 zerstört wird, erhöht. Weiterhin führt diese Doppelbariere zur Ausbildung einer verbesserten Fluiddichtigkeit, so daß wirksam verhindert wird, daß in einem Gas mitgerissene Flüssigkeiten, wie Öl, aus dem Kunststoffverdichtergehäuse 1 austreten können.

Die Vertiefung 27 wirkt ferner als eine zweite Vertiefung, da das dritte Gehäuseteil 15 zumindest teilweise in der Vertiefung 27 aufgenommen wird. Wie Figur 7 weiterhin zu entnehmen ist, weist das Innenteil 7a ein Abdichtelement 31 auf. Das Abdichtelement 31 ist in Form einer Nut ausgebildet, in der ein nicht dargestelltes Dichtungselement in Form eines O-Rings angeordnet wird. Obwohl durch den Duroplastkörper 11 eine sichere Verbindung der Einzelelemente des Gehäuseteils 7, d. h. des Innenteils 7a und der Oberschale 7b unter Normalbedingungen sichergestellt ist, wird durch das Abdichtelement 31 sichergestellt, daß auch bei extremsten Belastungen, bei welchen es zu einer relativen Bewegung zwischen dem Innenteil 7a und der Oberschale 7b kommen kann, eine Abdichtung des Verdichterkanals 29 sichergestellt ist. In analoger Weise weist das dritte Gehäuseteil 15 ein Abdichtelement 33 in Form einer Nut auf, in welcher ein nicht dargestelltes Dichtungselement, wie ein O-Ring, angeordnet ist. Hierdurch wird insbesondere einer Abdichtung des Luftansaugstutzens 3 erreicht, auch wenn es zu Relativbewegungen der aus unterschiedlichen Materialen bestehenden Komponenten des Kunststoffverdichtergehäuses in Form des dritten Gehäuseteils 15 und der Gehäuseteile 7, 9 bzw. des Duroplastkörpers 11 kommt.

Weiterhin ist in Figur 7 gezeigt, daß das Innenteil 7a ein erstes Verankerungselement in Form eines Hinterschnitts 35 aufweist. Der Hinterschnitt 35 stellt sicher, daß das Innenteil 7a bei einer Umspritzung des ersten Gehäuseteils 7 mit dem Duroplastkörper 11 in dem Duroplastkörper 11 verankert wird.

Wie insbesondere Figur 8 darstellt, die eine Detailansicht des Ausschnitts C der Figur 6 zeigt, weisen ferner auch die Oberschale 7b und die Unterschale 9 Verankerungselemente auf. So ist an der Endkante der Oberschale 7b eine Erhebung 37 ausgebildet, während die Unterschale 9 an einer Endkante eine Erhebung 39 aufweist. Durch die Erhebung 37 und 39 wird eine Verankerung der Oberschale 7b und der Unterschale 9 in dem Duroplastkörper 11 bei Umspritzung mit dem Duroplastmaterial mittels eines Form- und/oder Kraftschusses erreicht.

Auch der Duroplastkörper 11 weist ein zweites Verankerungselement in Form eines Hinterschnitts 41 auf. Durch dieses Verankerungselement wird ein sicheres kraft- bzw. formschlüssiges Halten des Thermoplast 19 an dem Duroplastkörper 11 erreicht. Somit wirken die Verankerungselemente 35, 37, 39 und 41 als Ankerpunkte für das Innenteil 7a, die Oberschale 7b und die Unterschale 9 sowie des Thermoplast 19 an dem Duroplastkörper 11.

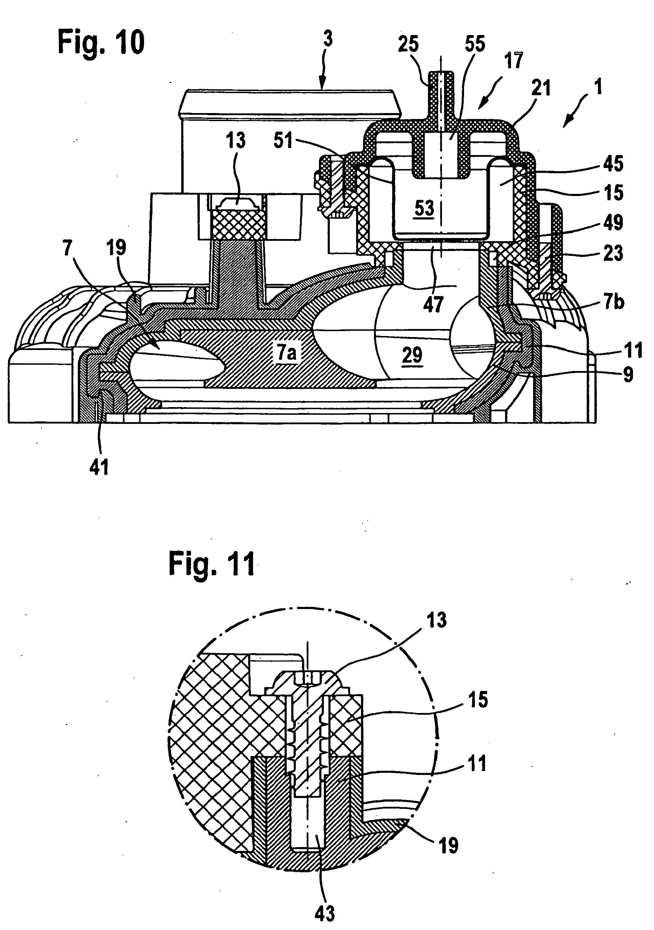

In Figur 9 ist eine Querschnittsansicht des Kunststoffverdichtergehäuses 1 entlang der Schnittlinie D-D der Figur 5 dargestellt. Wie insbesondere eine Zusammenschau der Figur 9 mit der Figur 10, die eine Querschnittsansicht des Kunststoffverdichtergehäuses 1 entlang des Schnittes E-E der Figur 5 darstellt, zeigt, stellt das Innenteil 7a eine Schneckeninnenkontur für den Verdichterkanal 29 bereit.

Figur 11 zeigt eine Detailansicht des Ausschnitts F der Figur 9. Wie aus Figur 11 ersichtlich, wird das dritte Gehäuseteil 15 mittels der Befestigungselemente in Form der Schrauben 13 an dem Duroplastkörper 11 befestigt. Dazu weist der Duroplastkörper 11 eine Sackbohrung 43 auf. Die Sackbohrung 43 bildet ein Befestigungsmittel, in dem die selbstschneidende Schraube Eingriff findet. Wie Figur 11 insbesondere zeigt, ist im Bereich des ersten Befestigungsmittels in Form der Sackbohrung 43 ein direkter Kontakt des dritten Gehäuseteils 15 mit dem Duroplastkörper 11 sichergestellt, da in diesem Bereich das Thermoplast 19 den Duroplastkörper 11 nicht überdeckt. Dadurch wird sichergestellt, daß es zu keiner Relativbewegung zwischen dem dritten Gehäuseteil 15 und dem Duroplastkörper 11 kommt.

Anhand Figur 10 wird nun die Funktionsweise des Schubumluftventils 17 erläutert. Das Schubumluftventil 17 weist einen Ventilraum 45 auf, der im wesentlichen durch das dritte Gehäuseteil 15 begrenzt wird. Durch eine Öffnung 47 in dem dritten Gehäuseteil 15 als auch in der Oberschale 7b steht der Ventilraum 45 in fluidaler Verbindung mit dem Verdichterkanal 29 im Bereich des Luftaustrittsstutzen 5. Für eine Abdichtung des Ventilraums 45 weist die Oberschale 7b ein Abdichtelement 49 in Form einer Vertiefung, in der ein nicht dargestelltes Dichtungselement in Form eines O-Rings angeordnet ist, auf. Die Öffnung 47 kann mittels einer Membran 51, die insbesondere ein Gummimaterial umfassen kann, verschlossen werden. Durch Anlegen eines Unterdrucks über den Anschlußstutzen 25 kann innerhalb eines Membranraums 53 ein Unterdruck erzeugt werden, durch den eine Bewegung der Membran 51 erfolgt wodurch die Öffnung 47 geöffnet wird.

Dabei wird die Membran gegen die Kraft eines nicht dargestellten Federelements, welches die Membran 51 in Richtung der Öffnung 47 zwingt, bewegt. Auch kann vorgesehen sein, daß in einem Zylinderraum 55 ein Betätigungselement angeordnet wird, das mechanisch mit der Membran 51 verbunden wird, wobei durch einen mittels des Anschlußstutzens 25 angelegten Unterdruck eine Bewegung des Betätigungselementes und damit der Membran 51 zur Freigabe der Öffnung 47 hervorgerufen wird. Insbesondere in den vorgenannten Ausführungsformen kann die Membran 51 mit zumindest einem Verstärkungselement, wie einem Stützteller, in Wirkverbindung stehen, dieses insbesondere umfassen. Sowohl das Betätigungselement als auch das Federelement können Angriff an dem Verstärkungselement finden.

In dem dritten Gehäuseteil 15 ist eine in Figur 10 nicht dargestellte Verbindungsleitung ausgebildet, welche den Ventilraum 45 mit dem Luftansaugstutzen 3 verbindet. Ein derartiges Schubumluftventil wird insbesondere in Turboladern für Otto-Motoren eingesetzt, um zu verhindern, daß bei einer geschlossenen Drosselklappe durch den Turbolader ein zu hoher Ladeluftdruck erzeugt wird.

Obwohl ein Schubumluftventil 17 beschrieben wurde, welches als Unterdruckventil ausgeführt ist, kann die Erfindung selbstverständlich auch mit einem als Überdruckventil konzipierten Schubumluftventil 17 ausgeführt werden.

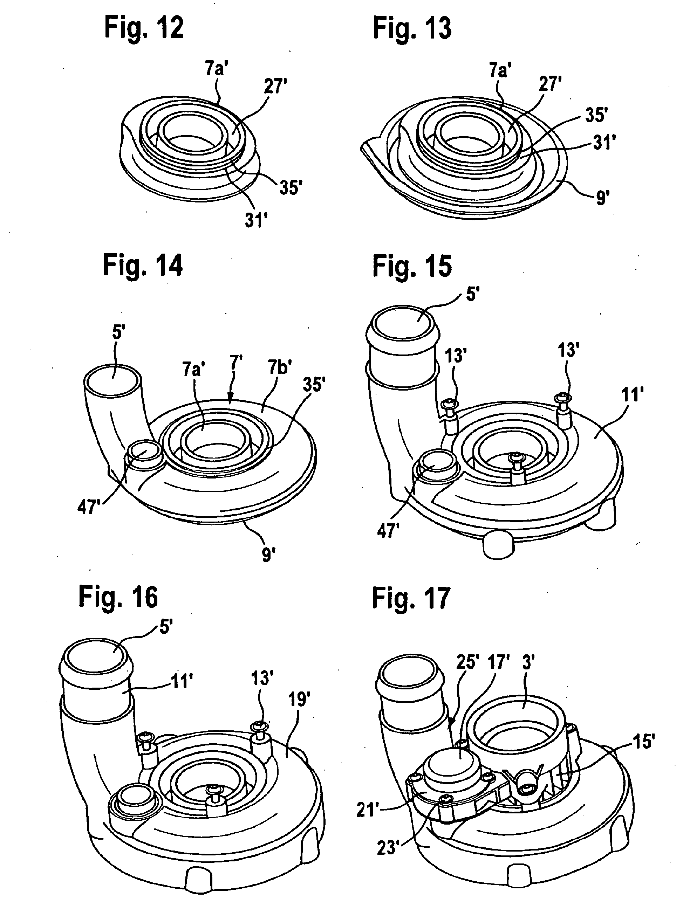

Anhand der Figuren 12 bis 18 wird nun der Ablauf eines erfindungsgemäßen Verfahrens zur Herstellung eines Kunststoffverdichtergehäuses 1' erläutert. Diejenigen Elemente des Kunststoffverdichtergehäuses 1', die denjenigen des Kunststoffverdichtergehäuses 1 funktional entsprechen, tragen die gleichen Bezugszeichen, allerdings einfach gestrichen.

In einem ersten Schritt wird zunächst eine Schnecke bzw. ein Innenteil 7a', welches aus einem duroplastischen Körper durch Spritzformen ausbildbar ist, bereitgestellt. Wie aus Figur 13 ersichtlich, wird um das Innenteil 7a' eine Unterschale 9' angeordnet. Auch die Unterschale 9' ist aus einem duroplastischen Werkstoff gebildet und kann aufgrund ihrer vergleichsweise einfachen Querschnittsform in einem Spritzgußverfahren hergestellt werden. Anschließend wird in einem nächsten Schritt, der in Figur 14 dargestellt ist, ein erstes Gehäuseteil 7' durch Zusammenführen des Innenteils 7a' mit einer Oberschale 7b' komplettiert. Wie insbesondere Figur 14 zu entnehmen ist, wird der Luftaustrittstutzen 5' zumindest teilweise durch die Oberschale 7b' bereitgestellt und in Figur 14 ist die Anordnung der Öffnung 47' zur Bereitstellung einer Fluidverbindung zu einem Verdichterkanal dargestellt. Weiterhin ist aus Figur 14 ersichtlich, daß diejenigen Teile des Innenteils 7a', die den Hinterschnitt 35' umfassen, so angeordnet sind, daß sie aus der Oberschale 7b' herausragen. Bei einer anschließenden Umspritzung des ersten Gehäuseteils 7' und des zweiten Gehäuseteils in Form der Unterschale 9' mit einem Duroplastkörper 11', wie es in Figur 15 dargestellt ist, wird erreicht, daß nicht nur die Oberschale 7b' und die Unterschale 9', sondern auch das Innenteil 7a' an dem Duroplastkörper 11' verankert werden indem alle Gehäuseteile bzw. Einzelelemente mit dem Duroplastkörper 11' in Kontakt stehen. In einem anschließenden Schritt wird der Duroplastkörper 11' durch haubenartige Umspritzung von dem Thermoplast 19' überdeckt. In der in Figur 16 dargestellten Variante wird das Ende des durch den Duroplastkörper 11' gebildeten Luftaustrittsstutzen 5' nicht von dem Thermoplastkörper 19' bedeckt. In einer alternativen Ausführungsform kann auch dieser Bereich des Duroplastkörpers 11' mit Thermoplast bedeckt sein oder aber auch eine weiteres Fluidleitelement, wie ein Filterelement, mit dem Luftaustrittsstutzen 5' verbunden und von dem Thermoplast 19' zumindest teilweise bedeckt werden. Hierdurch läßt sich auf einfache Weise eine sichere Verbindung des Kunststoffverdichtergehäuses 1' mit dem Fluidleitelement erzielen. Wie Figur 16 weiterhin zu entnehmen ist, überdeckt das Thermoplast 19' jedoch den Duroplastkörper 11' im Bereich der Schrauben 13' nicht. Dadurch wird sichergestellt, daß eine sichere Befestigung des dritten Gehäuseteils 15' auf dem Duroplastkörper 11' erreicht wird.

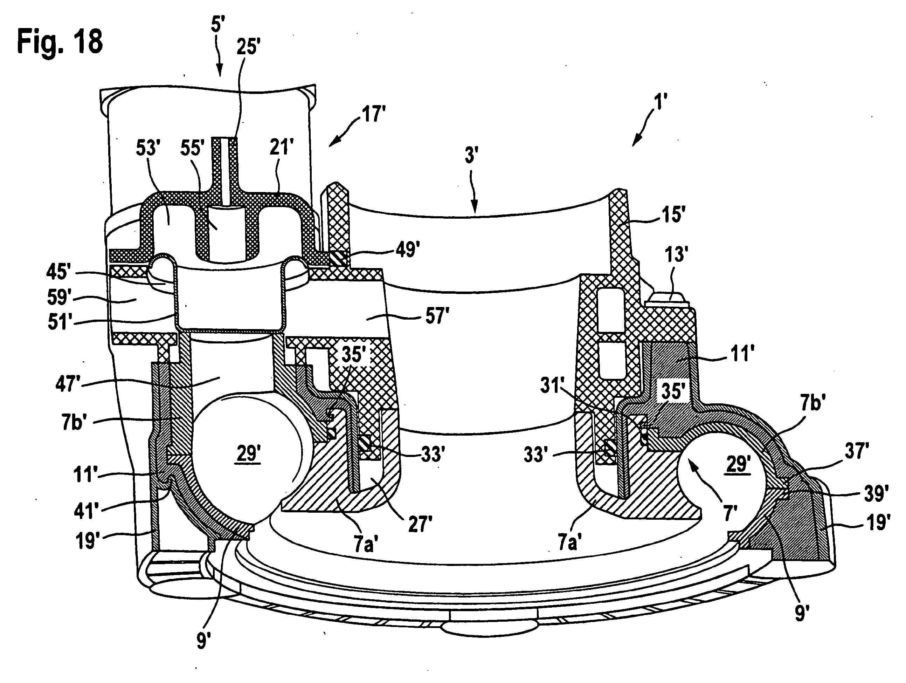

In Figur 18 ist eine Querschnittsansicht des Kunststoffverdichtergehäuses 1' dargestellt. Aus Figur 18 sind weitere Details des dritten Gehäuseteils 15' des Kunststoffverdichtergehäuses 1' zu erkennen. So weist das dritte Gehäuseteil 15' eine Verbindungsleitung 57' auf. Diese Verbindungsleitung 57' steht einerseits mit dem Ventilsraum 45' und andererseits mit dem Luftansaugstutzen 3' in fluidaler Verbindung. In dem Fall, in dem die Membran 51' die Öffnung 47' freigibt, wird auf dieser Weise ein Sekundärkreislauf zwischen dem Luftaustrittsstutzen 5' und dem Luftansaugstutzen 3' geöffnet. Dies ist darin begründet, daß die Öffnung 47' im Bereich des Luftaustrittsstutzen 5' in den Verdichterkanal 29' mündet. Bei Einsatz des Kunststoffverdichtergehäuses 1 für einen Turbolader eines Otto-Motors wird dadurch erreicht, daß bei einer geschlossenen Drosselklappe eine Erzeugung eines zu hohen Ladedrucks durch den Turbolader vermieden wird, da die Luft aus dem Verdichterkanal 29' durch die Öffnung 47' und die Verbindungsleitung 57' wieder in dem Luftansaugstutzen 3' expandiert bzw. der wesentliche Teil des Verdichterkanals 29' über einen Bypass umgangen wird. Das dritte Gehäuseteil 15' weist ferner eine Verbindungsleitung 59', die den Ventilraum 45' mit der Umgebung des Kunststoffverdichtergehäuses 1' verbindet, auf. Durch einen geeigneten Verschluß einer der Verbindungsleitungen 57' oder 59' über ein nicht dargestelltes Verschlußelement kann über das Schubumluftventil 17' eine Expansion der komprimierten Ladeluft wahlweise in die umgebene Atmosphäre oder den Luftansaugstutzen 3' erreicht werden. Auch kann der Ausgang der Verbindungsleitung 59' mit einem anderen Bauteil, wie einer weiteren Fluidleitung oder einem Filter bzw. Dämpfer, verbunden werden.

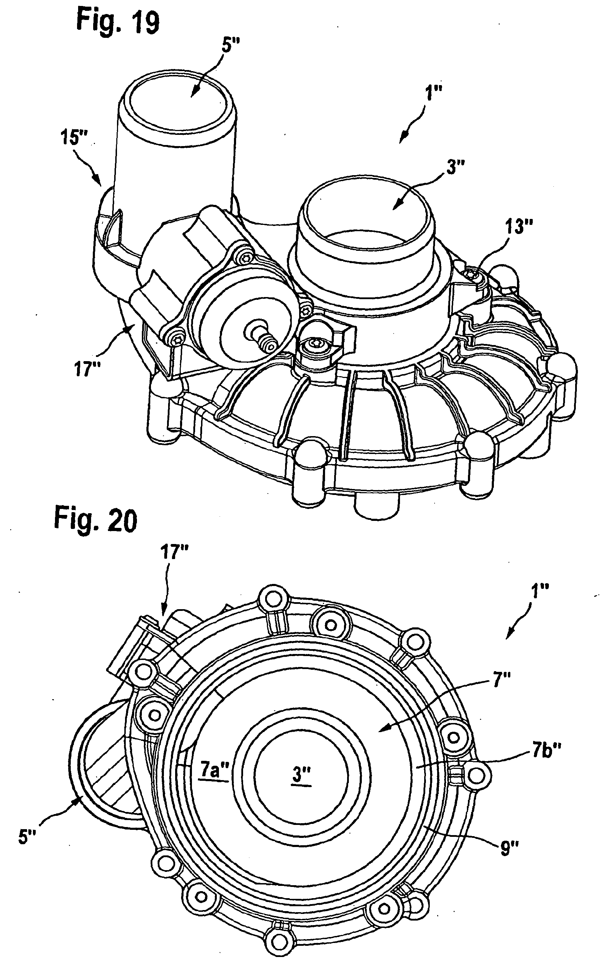

In Figur 19 ist eine dritte Ausführungsform eines erfindungsgemäßen Kunststoffverdichtergehäuses 1" dargestellt. Diejenigen Elemente des Kunststoffverdichtergehäuses 1", die denjenigen des Kunststoffverdichtergehäuses 1 bzw. des Kunststoffverdichtergehäuses 1' funktional entsprechen, tragen die gleichen Bezugszeichen, allerdings doppelt gestrichen.

Im Vergleich zu den Kunststoffverdichtergehäusen 1, 1' weist das Kunststoffverdichtergehäuse 1" eine veränderte Anordnung des Luftaustrittsstutzen 5" auf, die sich durch eine geometrisch veränderte Form des ersten Gehäuseteils 7" und des zweiten Gehäuseteils 9" ergibt. Der Luftaustrittsstutzen 5" ist ferner teilweise durch das dritte Gehäuseteil 15" ausgebildet und weist eine Symmetrieachse auf, die im wesentlichen parallel zu der Symmetrieachse des Luftansaugstutzens 3" verläuft.

Ähnlich den Kunststoffverdichtergehäusen 1, 1' weist das Kunststoffverdichtergehäuse 1" gemäß den Figuren 19 und 20 ein erstes Gehäuseteil 7" auf, welches durch Einzelelemente in Form eines Innenteils 7a" und einer Oberschale 7b" ausgebildet ist. Weiterhin umfaßt das Kunststoffverdichtergehäuse 1" ein zweites Gehäuseteil, welches im wesentlichen einstückig ausgebildet ist in Form einer Unterschale 9". Sowohl das erste Gehäuseteil als auch das zweite Gehäuseteil des Kunststoffverdichtergehäuses 1" sind aus einem Duroplastwerkstoff ausgebildet und/oder umfassen einen Duroplastwerkstoff.

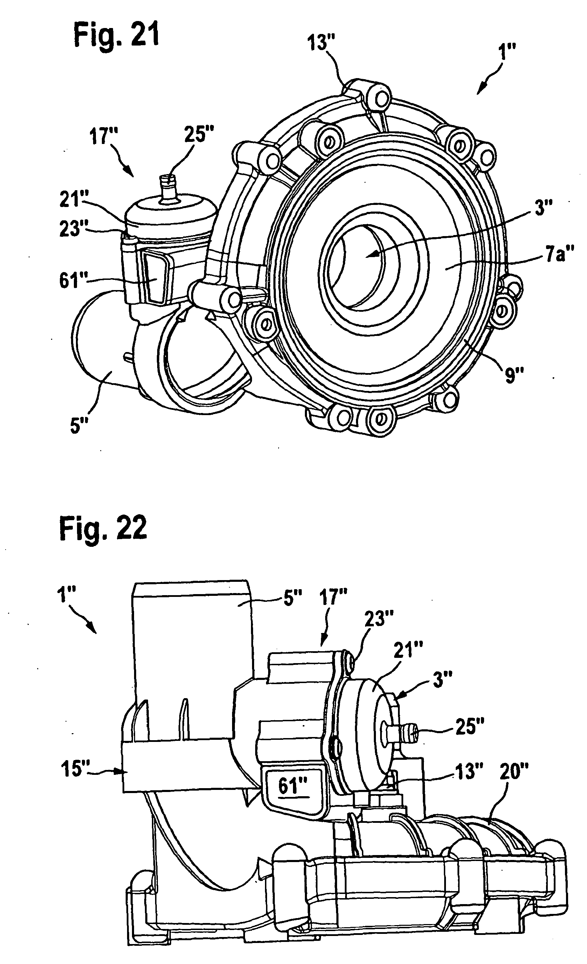

Wie den Figuren 21 und 22, die perspektivische Ansichten auf das Kunststoffverdichtergehäuse 1" darstellen, zu entnehmen ist, sind das erste Gehäuseteil 7" sowie das zweite Gehäuseteil in Form der Unterschale 9" mit einem Thermoplastkörper 20" umspritzt. Mittels eines dritten Verbindungselementes in Form von Schrauben 13" ist das dritte Gehäuseteil 15" auf dem Thermoplastkörper 20" befestigt. Weiterhin ist in Figur 22 gezeigt, daß der Luftaustrittsstutzen 5" im wesentlichen durch das dritte Gehäuseteil 15" gebildet wird. An dem dritten Gehäuseteil 15" ist ein Teil eines Schubumluftventils 17" ausgebildet. Das Schubumluftventil 17" wird durch einen über Schrauben 23" an dem dritten Gehäuseteil 15" befestigten Deckel 21" komplettiert. In dem Deckel 21" ist ein Anschlußstutzen 25" für eine Drucksteuerung ausgebildet.

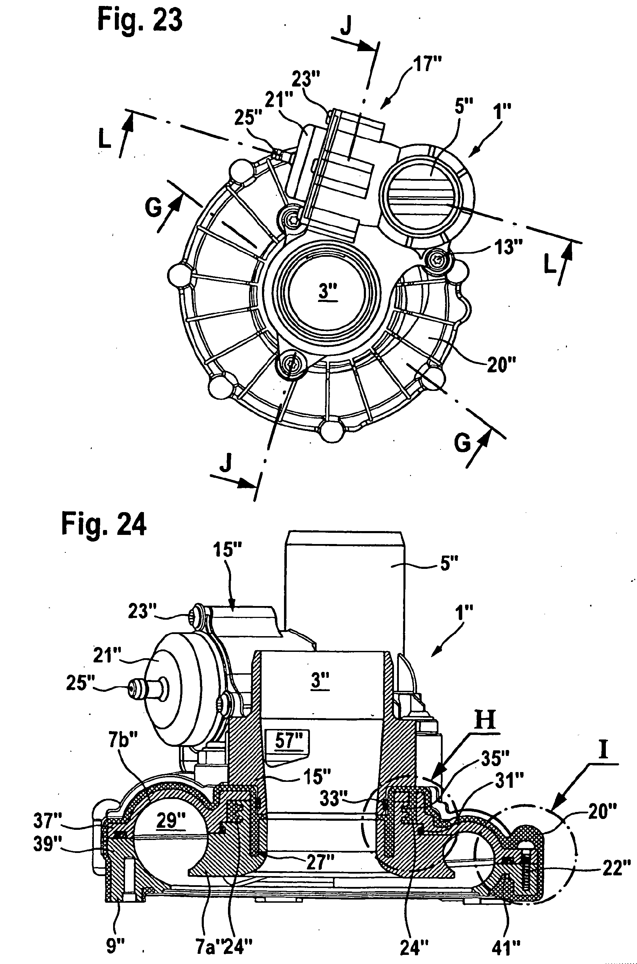

In Figur 23 ist eine perspektivische Aufsicht auf das Kunststoffverdichtergehäuse 1" dargestellt. Anhand der Figuren 24 bis 29, die Schnittansichten entlang der Schnitte G-G, J-J sowie L-L und jeweilige Detailansichten entlang von Ausschnitten H, I, K der Schnittansichten zeigen, wird im Folgenden die Herstellung und der Aufbau des Kunststoffverdichtergehäuses 1" genauer erklärt.

In Figur 24 ist eine Querschnittsansicht des Kunststoffverdichtergehäuses 1'' entlang des Schnittes G-G der Figur 23 dargestellt. Wie der Figur 24 zu entnehmen ist, wird ein erstes Gehäuseteil 7" durch ein Innenteil 7a" und eine Oberschale 7b" gebildet. Ein zweites Gehäuseteil wird durch eine Unterschale 9" gebildet. Im Gegensatz zu den Kunststoffverdichtergehäusen 1, 1' sind das erste Gehäuseteil 7" und das zweite Gehäuseteil 9" jedoch nicht mit einem Duroplastkörper umspritzt. Das erste und das zweite Gehäuseteil werden bei der Herstellung des Kunststoffverdichtergehäuses 1" über ein viertes Verbindungselement in Form einer Schraubverbindung 22" miteinander verbunden. Die so miteinander verbundenen Einzelelemente 7b" und 9" werden dann in eine Umspritzform eingelegt, wobei in die Oberschale 7b" anschließend das Innenteil 7a" eingelegt wird. Aufgrund der Schraubverbindung 22" ist eine Relativbewegung zwischen diesen beiden Elementen bei einer Umspritzung mit dem Thermoplastkörper 20" ausgeschlossen. Aufgrund der aneinander angepaßten Außen- bzw. Innenkonturen des Innenteils 7a" und der Oberschale 7b" ist eine Relativbewegung zwischen diesen Elementen des ersten Gehäuseteils bei einer Umspritzung mit dem Theroplastkörper 20" ausgeschlossen, so daß in der dargestellten Ausführungsform auf ein zusätzliches Verbindungselement zwischen diesen Einzelelementen verzichtet werden kann.

Der Thermoplastkörper 20" deckt die in den ersten und zweiten Gehäuseteil ausgebildeten Verankerungselemente so ab, daß ein fester Verbund zwischen den Gehäuseteilen entsteht. Insbesondere umschließt der Thermoplastkörper 20" Erhebungen 37", 39", tritt in Hinterschnitte 41" und Vertiefungen 27" ein. Auch umschließt der Thermoplastkörper 20" Hinterschnitte 35". Somit werden die Einzelelemente 7a", 7b" und 9" über den Thermoplastkörper 20" form- und kraftschlüssig miteinander verbunden bzw. in dem Thermoplastkörper 20" verankert. Da der Thermoplastkörper 20" ferner in eine Vertiefung 27" eintritt bzw. dieser ausfüllt entsteht auch in dem Kunststoffverdichtergehäuse 1" eine wie zuvor beschriebene Doppelbarriere. Ein aus dem Verdichterkanal 29" in das Innenteil 7a" eintretendes Bruchstück eines Einzelelementes oder eines nicht dargestellten Verdichterrades könnte zwar zu einer Zerstörung des Innenteils 7a" führen, jedoch würde das Bruchstück an der in der Vertiefung 27a" ausgebildeten Thermoplastbarriere aufgehalten werden.

Aufgrund der Tatsache, daß der Thermoplastkörper 20" umlaufenden in einen Zwischenraum 24" zwischen dem Innenteil 7a" und der Oberschale 7b" eintritt, kommt es ferner auch zu einer stoffschlüssigen Verbindung des Innenteils 7a" und der Oberschale 7b" über den Thermoplastkörper 20". Nach einer erfolgten Umspritzung der ersten und zweiten Gehäuseteile des Kunststoffverdichtergehäuses 1" kann das dritte Gehäuseteil 15", welches in Form eines Aufsatzes ausgebildet ist, über Schrauben 13" an dem Thermoplastkörper 20" bzw. dem ersten Gehäuseteil 7" und dem zweiten Gehäuseteil 9" befestigt werden.

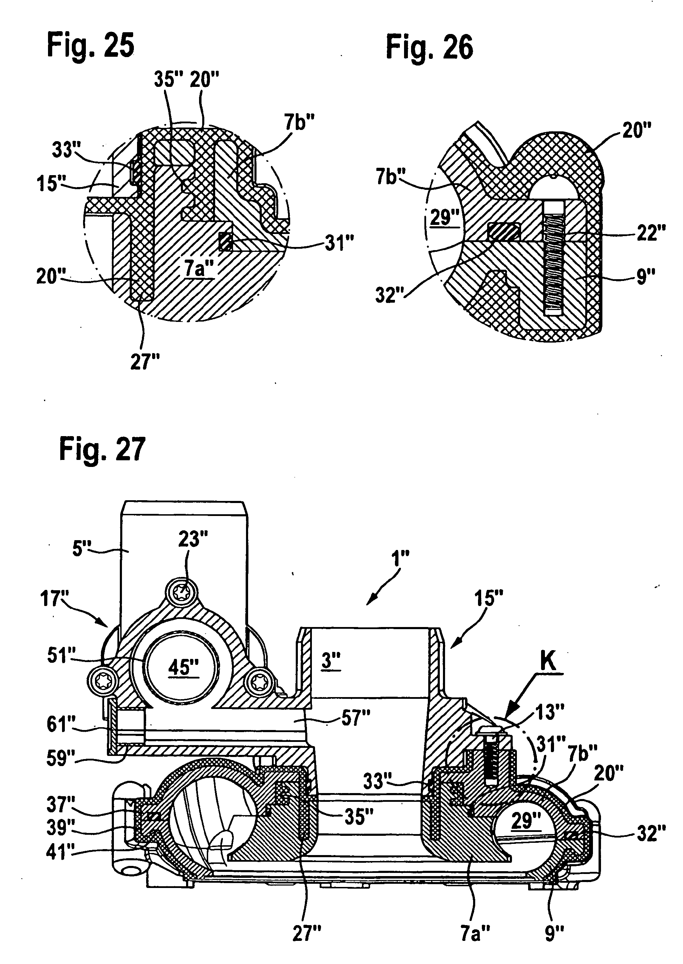

In Figur 25 ist eine Detailansicht des Ausschnitts H der Figur 24 dargestellt. Aus der Figur 25 ist insbesondere ersichtlich, wie der Thermoplastkörper 20" in die Hinterschnitte 35" zur Verankerung eingreift, die Vertiefung 27" zur Ausbildung der Doppelbarriere ausfüllt sowie daß Abdichtelemente 31" und 33" zwischen dem Innenteil 7a" und der Oberschale 7b" einerseits bzw. dem Thermoplastkörper 20" und dem dritten Gehäuseteil 15" angeordnet sind. Die Abdichtelemente 31" und 33" sind in Form von O-Ringen ausgebildet. Ferner erkennt man, wie die Außenkontur des Innenteils 7a" an die Innenkontur der Oberschale 7b" angepaßt ist um eine Verschiebung dieser Elemente zueinander bei einer Umspritzung des Thermoplastkörpers 20" zu vermeiden.

In Figur 26 ist eine Detailansicht des Ausschnitts I der Figur 24 dargestellt. Gut zu erkennen ist, wie die Oberschale 7b" und die Unterschale 9" über die Schraubverbindungen 22" kraftschlüssig miteinander verbunden werden. Dadurch ist sichergestellt, daß die Oberschale 7b" sich nicht relativ zu der Unterschale 9" bewegen kann, wenn der Thermoplastkörper 20" durch Umspritzung erzeugt wird. Weiterhin ist in Figur 26 ein weiteres Abdichtelement 32" zu erkennen, welches eine Abdichtung zwischen der Oberschale 7b" und der Unterschale 9" sicherstellt, so daß insbesondere Fluide aus dem Verdichterkanal 29" auch bei extremen Belastungen nicht austreten können.

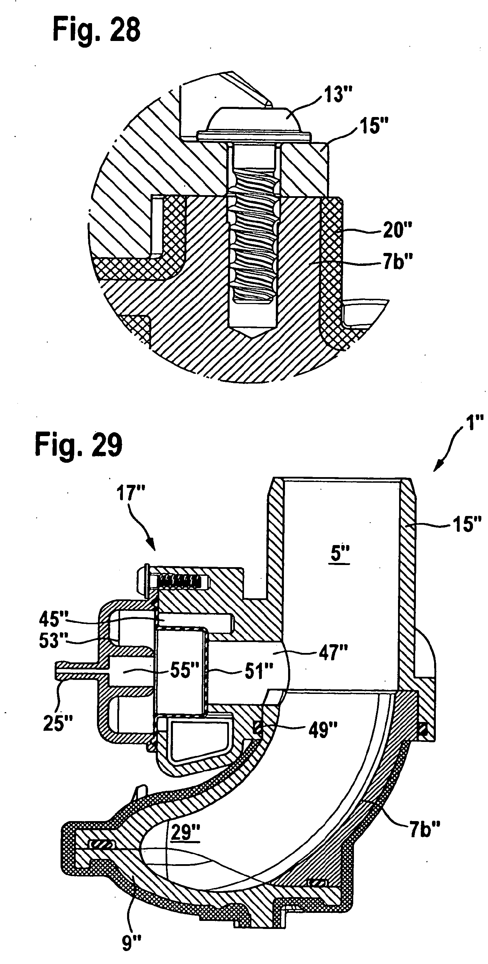

In Figur 27 ist eine Querschnittsansicht des Kunststoffverdichtergehäuses 1" entlang des Schnittes J-J der Figur 23 dargestellt. Wie der Figur 27 insbesondere zu entnehmen ist, ist der Luftansaugstutzen 3" über eine Verbindungsleitung 57" mit einem Ventilraum 45" verbunden. In dem Ventilraum 45" ist eine Membran 51" angeordnet. Die Verbindungsleitung 57" ist an einer Seite über ein Verschlußelement 61" verschlossen und mündet auf der anderen Seite in den Luftansaugstutzen 3", wie insbesondere in Figur 24 gezeigt. Wie insbesondere anhand der Figur 29 erläutert werden wird, wird durch die Membran 51 " ein Schubumluftventil 17" geöffnet und geschlossen. Bei Öffnung des Schubumluftventils 17" durch eine Bewegung der Membran 51" wird eine Verbindung des Luftansaugstutzens 3" mit dem Luftaustrittsstutzen 5" hergestellt. Dies erfolgt insbesondere in den Zuständen, in denen eine Drosselklappe des Motors geschlossen ist und in dem Luftaustrittsstutzen 5" ein zu hoher Druck entsteht. Wie Figur 27 weiterhin zu entnehmen ist, dienen die Schrauben 23" zur Befestigung eines Deckels 21 " an dem dritten Gehäuseteil 15".

In Figur 28 ist eine Detailansicht des Ausschnitts K der Figur 27 dargestellt. Wie Figur 28 zu entnehmen ist, ist das dritte Gehäuseteil 15" über Schrauben 13" mit dem ersten bzw. zweiten Gehäuseteil verbunden. Wie jedoch der Figur 28 zu entnehmen ist, überdeckt der Thermoplastkörper 20" die Oberschale 7b" nicht vollständig, so daß das dritte Gehäuseteil 15" direkt auf der Oberschale 7b", die Duroplastwerkstoff umfaßt , aufliegt. Dadurch wird eine Relativbewegung des vorzugsweise einen faserverstärkten Thermoplast umfassenden dritten Gehäuseteils 15" relativ zu der Oberschale 7b" vermieden.

Schließlich wird anhand der Figur 29, welche eine Querschnittsansicht des Kunststoffverdichtergehäuses 1" entlang des Schnittes L-L der Figur 23 darstellt, die Funktionsweise des Schubumluftventils 17" ergänzt. Wie Figur 29 zu entnehmen ist, ist der Ventilraum 45" in dem die Verbindungsleitung 57" zu dem Luftansaugstutzen 3" mündet, von einer Öffnung 47", die in den Luftaustrittsstutzen 5" mündet, mittels der Membran 51" getrennt. Durch Anlegen eines entsprechenden Drucksignals an den Anschlußstutzen 25" kann die Membran 51" gegen ein nicht dargestelltes Federelement in Richtung des Zylinderraums 55" bewegt werden und so eine Verbindung zwischen der Verbindungsleitung 57" und der Öffnung 47" und damit eine Verbindung zwischen dem Luftansaugstutzen 3" und dem Luftaustrittsstutzen 5" hergestellt werden. So wird eine Bypassleitung um den Verdichter gebildet, so daß die Luft aus dem Luftansaugstutzen 3" direkt in den Luftaustrittsstutzen 5" eintreten kann.

Wie Figur 29 weiterhin zu entnehmen ist, wird durch das dritte Gehäuseteil 15" zumindest bereichsweise eine Funktionskomponente des Kunststoffverdichtergehäuses 1" in Form des Luftaustrittsstutzens 5" gebildet. Weiterhin wird durch das dritte Gehäuseteil 15" auch eine weitere Funktionskomponente des durch das Kunststoffverdichtergehäuse 1" gebildeten Verdichters in Form des Schubumluftventils 17" gebildet. Weitere Funktionskomponenten des Verdichters können ebenfalls durch das erste Gehäuseteil, das zweite Gehäuseteil oder das dritte Gehäuseteil zumindest teilweise gebildet werden. So ist in einer bevorzugten Ausführungsform des Kunststoffverdichtergehäuses 1" vorgesehen, daß eine sogenannte Steuerdose zumindest bereichsweise in einem der Gehäuseteile ausgebildet wird. Unter einer Steuerdose wird ein Element verstanden, welches zur Druckregelung der Turbinenseite des Verdichters eingesetzt wird. Da jedoch an der Turbinenseite sehr hohe Temperaturen vorliegen können, ist es bevorzugt, daß eine derartige Steuerdose auf der Verdichterseite des Verdichters angeordnet wird und eine Druckregelung auf der Turbinenseite über ein mit der Steuerdose verbundenes mechanisches Element erreicht wird. Aufgrund der Mehrteiligkeit des erfindungsgemäßen Kunststoffverdichtergehäuses lassen sich auch solche zu einer hohen Bauteilkomplexität führenden Funktionselemente eines Verdichters in das Kunststoffverdichtergehäuse zumindest teilweise integrieren, ohne daß der Herstellungsprozeß verkompliziert wird oder die Stabilität des Kunststoffverdichtergehäuses darunter leidet.

### Bezugszeichenliste

- 1, 1', 1": Kunststoffverdichtergehäuse
- 3, 3', 3": Luftansaugstutzen
- 5, 5', 5": Luftaustrittsstutzen
- 7, 7', 7": Gehäuseteil
- 7a, 7a', 7a": Innenteil
- 7b, 7b', 7b": Oberschale
- 9, 9', 9": Unterschale
- 11, 11': Duroplastkörper
- 13, 13', 13": Schraube
- 15, 15', 15": Gehäuseteil
- 17, 17', 17": Schubumluftventil
- 19, 19': Thermoplast
- 20": Thermoplastkörper
- 21, 21', 21": Decke
- 22": Schraubverbindung
- 23, 23', 23": Schraube
- 24": Zwischenraum
- 25, 25', 25": Anschlußstutzen
- 27, 27', 27": Vertiefung
- 29, 29', 29": Verdichterkanal
- 31, 31', 31": Abdichtelement
- 32": Abdichtelement
- 33, 33', 33": Abdichtelement
- 35, 35', 35": Hinterschnitt
- 37, 37', 37": Erhebung
- 39, 39', 39": Erhebung
- 41, 41', 41": Hinterschnitt
- 43: Sackbohrung
- 45, 45', 45": Ventilraum
- 47, 47', 47": Öffnung
- 49, 49', 49": Abdichtelement
- 51, 51', 51": Membran
- 53, 53', 53": Membranraum
- 55, 55', 55": Zylinderraum
- 57', 57": Verbindungsleitung
- 59', 59": Verbindungsleitung
- 61": Verschlußelement

- A-A: Schnitt
- B: Ausschnitt
- C: Ausschnitt
- D-D: Schnitt
- E-E: Schnitt
- F: Ausschnitt
- G-G: Schnitt
- H: Ausschnitt
- I: Ausschnitt
- J-J: Schnitt
- K: Ausschnitt
- L-L: Schnitt
- S: Symmetrieachse

## Patentansprüche

1. Kunststoffturboladergehäuse (1, 1', 1") mit zumindest einem ersten Gehäuseteil (7, 7', 7") und zumindest einem zweiten Gehäuseteil (9,9',9"), die jeweils zumindest bereichsweise zumindest einen Duroplastwerkstoff umfassen, wobei das erste Gehäuseteil (7, 7', 7") und/oder das zweite Gehäuseteil zumindest zwei Einzelelemente (7a, 7b, 7a', 7b',7a", 7b") umfaßt bzw. umfassen, **dadurch gekennzeichnet, daß**
das erste Gehäuseteil (7, 7', 7") und das zweite Gehäuseteil (9, 9', 9") zumindest bereichsweise mit zumindest einem Duroplastkörper (11, 11') oder zumindest einem Thermoplastkörper (20") so umspritzt sind, daß das erste Gehäuseteil (7, 7', 7"), das zweite Gehäuseteil (9, 9', 9") und die Einzelelemente (7a, 7b, 7a', 7b', 7a", 7b") des ersten Gehäuseteils und/oder des zweiten Gehäuseteils (9, 9', 9") jeweils zumindest bereichsweise mit dem Duroplastkörper (11,11') oder dem Thermoplastkörper (20") in Kontakt stehen.

2. Kunststoffturboladergehäuse nach Anspruch 1, **dadurch gekennzeichnet, daß**
das erste Gehäuseteil (7, 7', 7") zumindest ein erstes Einzelelement, vorzugsweise in Form zumindest eines, insbesondere zumindest eine Schneckeninnenkontur und/oder zumindest einen Verdichterkanal zumindest teilweise bereitstellenden bzw. begrenzenden, ersten Innenteils (7a, 7a', 7a"), und/oder ein zweites Einzelelement, vorzugsweise in Form zumindest einer Oberschale (7b, 7b', 7b"), umfaßt.

3. Kunststoffturboladergehäuse nach Anspruch 1 oder 2, **dadurch gekennzeichnet, daß**
das zweite Gehäuseteil zumindest ein drittes Einzelelement, vorzugsweise in Form zumindest eines, insbesondere zumindest eine Schneckeninnenkontur und/oder zumindest einen Verdichterkanal zumindest teilweise bereitstellenden bzw. begrenzenden, zweiten Innenteils, und/oder ein viertes Einzelelement, vorzugsweise in Form zumindest einer Unterschale (9, 9' ,9"), umfaßt.

4. Kunststoffturboladergehäuse nach einem der vorangehenden Ansprüche, **dadurch gekennzeichnet, daß**
das erste Gehäuseteil (7,7',7"), das zweite Gehäuseteil (9, 9',9") und/oder zumindest ein Einzelelement, insbesondere das erste Einzelelement (7a, 7a', 7a"), das zweite Einzelelement (7b, 7b',7b"), das dritte Einzelelement und/oder das vierte Einzelelement, insbesondere auf zumindest einer ersten Oberfläche und/oder im Bereich zumindest einer Endkante, zumindest ein erstes Verankerungselement (35, 35',35", 37', 37', 37", 39, 39', 39") umfaßt bzw. Umfassen, wobei vorzugsweise zumindest eine zweite Oberfläche des ersten Verankerungselements (35, 35', 35",37, 37', 37", 39, 39', 39") zumindest bereichsweise, insbesondere vollständig, von dem Duroplastkörper (11, 11') oder dem Thermoplastkörper (20") bedeckt ist.

5. Kunststoffturboladergehäuse nach einem der vorangehenden Ansprüche, **dadurch gekennzeichnet, daß**,
insbesondere bei Umspritzung des ersten Gehäuseteils (7, 7', 7") und des zweiten Gehäuseteils (9, 9', 9") mit dem Duroplastkörper (11,11'), das erste Gehäuseteil (7, 7', 7"), das zweite Gehäuseteil (9, 9', 9"), zumindest ein Einzelelement, insbesondere das erste Einzelelement (7a, 7a', 7a"), das zweite Einzelelement (7b, 7b', 7b"), das dritte Einzelelement und/oder das vierte Einzelelement, der Thermoplastkörper (20") und/oder der Duroplastkörper (11, 11'), zumindest teilweise, von zumindest einem Thermoplast (19, 19') haubenartig überdeckt ist bzw. sind.

6. Kunststoffturboladergehäuse nach einem der vorangehenden Ansprüche, **dadurch gekennzeichnet, daß**
auf zumindest einer dritten Oberfläche des ersten Gehäuseteils, des zweiten Gehäuseteils, zumindest eines Einzelelements, insbesondere des ersten Einzelelements, des zweiten Einzelelements, des dritten Einzelelements und/oder des vierten Einzelelements, und/oder des Duroplastkörpers (11,11') zumindest ein zweites Verankerungselement (41,41 41") ausgebildet ist, wobei vorzugsweise zumindest eine vierte Oberfläche des zweiten Verankerungselements (41, 41', 41") zumindest bereichsweise, insbesondere vollständig, von dem Thermoplast (19, 19') oder dem Thermoplastkörper (20") bedeckt ist.

7. Kunststoffturboladergehäuse nach einem der vorangehenden Anspruche, **dadurch gekennzeichnet, daß**
das erste Gehäuseteil (7, 7', 7"), das zweite Gehäuseteil (9, 9', 9"), zumindest ein Einzelelement (7a, 7a', 7a"), insbesondere das erste Einzelelement (7b, 7b', 7b"), das zweite Einzelelement, das dritte Einzelelement und/oder das vierte Einzelelement, der Duroplastkörper, der Thermoplastkörper (20") und/oder das Thermoplast zumindest bereichsweise zumindest einen Fluidansaugstutzen, insbesondere Luftansaugstutzen (3,3', 3"), zumindest einen Verdichterkanal (29, 29', 29") und/oder zumindest bereichsweise zumindest einen Fluidaustrittsstutzen, insbesondere Luftaustrittsstutzen (5, 5', 5"), bereitstellt bzw. bereitstellen.

8. Kunststoffturboladergehäuse nach einem der vorangehenden Ansprüche, **dadurch gekennzeichnet, daß**
zumindest ein mit dem Fluidansaugstutzen (3,3' , 3"), dem Verdichterkanal (29, 29', 29") und/oder dem Fluidaustrittsstutzen (5, 5', 5") verbindbares erstes Fluidleitelement, insbesondere umfassend zumindest ein Fluidfilterelement, zumindest ein Leitungselement, wie ein Fluidrohr, und/oder zumindest ein Dämpfungselement, wie einen Ladeluftdämpfer, zumindest bereichsweise von dem Thermoplastkörper (20") oder dem Thermoplast (19, 19') überdeckt ist, wobei vorzugsweise auf zumindest einer, insbesondere von dem Thermoplastkörper (20") oder dem Thermoplast (19, 19') zumindest bereichsweise überdeckten, fünften Oberfläche des ersten Fluidleitelements zumindest ein drittes Verankerungselement ausgebildet ist und/oder zumindest eine, insbesondere von dem Thermoplast zumindest bereichsweise überdeckte, Oberfläche des Fluidansaugstutzens, des Verdichterkanals und/oder des Fluidaustrittsstutzens die erste Oberfläche bildet.

9. Kunststoffturboladergehäuse nach Anspruch 8, **dadurch gekennzeichnet, daß**
das erste Fluidleitelement zumindest bereichsweise einen Kunststoff und/oder ein Metall umfaßt.

10. Kunststoffturboladergehäuse nach einem der vorangehenden Ansprüche, **dadurch gekennzeichnet, daß**
zumindest eine erste Vertiefung (27, 27', 27") in dem ersten Gehäuseteil (7, 7', 7"), dem zweiten Gehäuseteil, zumindest einem Einzelelement, insbesondere dem ersten Einzelelement (7a, 7a', 7a"), dem zweiten Einzelelement, dem dritten Einzelelement und/oder dem vierten Einzelelement, und/oder dem Duroplastkörper (11, 11') ausgebildet ist, wobei vorzugsweise zumindest eine, insbesondere dem Verdichterkanal (29, 29',29") zugewandte, Wandung der ersten Vertiefung (27, 27', 27") zumindest bereichsweise mit dem Thermoplast (19,19') oder dem Thermoplastkörper (20") bedeckt ist.

11. Kunststoffturboladergehäuse nach Anspruch 10, **dadurch gekennzeichnet, daß**
die erste Vertiefung (27, 27', 27") zumindest bereichsweise benachbart zu dem Verdichterkanal (29, 29', 29") und/oder zumindest bereichsweise zwischen dem Verdichterkanal (29, 29', 29") und dem Fluidansaugstutzen (3, 3', 3") angeordnet ist.

12. Kunststoffturboladergehäuse nach einem der vorangehenden Ansprüche, **dadurch gekennzeichnet, daß**
das erste Gehäuseteil (7, 7', 7"), das zweite Gehäuseteil (9, 9', 9"), zumindest ein Einzelelement, insbesondere das erste Einzelelement (7a, 7a', 7a"), das zweite Einzelelement (7b, 7b', 7b"), das dritte Einzelelement und/oder das vierte Einzelelement, der Duroplastkörper (11, 11'), der Thermoplastkörper (20"), der Thermoplast und/oder das erste Fluidleitelement mit zumindest einem dritten Gehäuseteil (15, 15', 15") verbindbar ist bzw. sind.

13. Kunststoffturboladergehäuse nach Anspruch 12, **dadurch gekennzeichnet, daß**
das erste Gehäuseteil (7, 7', 7"), das zweite Gehäuseteil (9,9',9"), das dritte Gehäuseteil (15, 15') zumindest teilweise zumindest eine Funktionskomponente des Kunststoffverdichtergehäuses (1, 1', 1") und/oder eines das Kunststoffverdichtergehäuse (1, 1' 1") umfassenden Verdichters umfaßt, insbesondere zumindest bereichsweise den Fluidansaugstutzen (3,3',3"), zumindest ein erstes Verbindungselement zur Verbindung zumindest eines zweiten Fluidleitelements, wie eines Fluid- und/oder Luftschlauchs, mit dem Fluidansaugstutzen (3,3',3"), zumindest bereichsweise den Fluidaustrittsstutzen (5, 5', 5"), zumindest ein zweites Verbindungselement zur Verbindung zumindest eines dritten Fluidleitelements, wie eines Fluid- und/oder Luftschlauchs, mit dem Fluidaustrittsstutzen (5, 5', 5"), zumindest eine, insbesondere in fluidaler Verbindung mit dem Fluidansaugstutzen (3,3',3"), dem Verdichterkanal (29, 29', 29") und/oder dem Fluidaustrittsstutzen (5, 5', 5") stehende, Verbindungsleitung (57', 59', 57", 59") und/oder zumindest eine, insbesondere mit der Verbindungsleitung in Wirkverbindung stehende, Ventilvorrichtung (17, 17', 17") und/oder zumindest eine Steuerdose, vorzugsweise zur Steuerung eines Druckes innerhalb des Verdichters, umfaßt.

14. Kunststoffturboladergehäuse nach Anspruch 1, **dadurch gekennzeichnet, daß** mittels der Verbindungsleitung (57',59', 57", 59") eine zumindest indirekte fluidale Verbindung zwischen dem Fluidansaugstutzen (3") und dem Fluidaustrittsstutzen (5"), dem Verdichterkanal (29, 29') und dem Fluidansaugstutzen (3,3'), dem Verdichterkanal und dem Fluidaustrittsstutzen und/oder einer Umgebungsatmosphäre einerseits und dem Fluidansaugstutzen (3"), dem Verdichterkanal (29, 29') und/oder dem Fluidaustrittsstutzen (5") andererseits herstellbar ist, wobei vorzugsweise die Verbindung mittels der Ventilvorrichtung (17, 17', 17") steuer- und/oder regelbar ist, insbesondere die Ventilvorrichtung in Form Schubumluftventils ausgebildet ist.

15. Kunststoffturboladergehäuse nach einem der Ansprüche 12 bis 14, **dadurch gekennzeichnet, daß**
das dritte Gehäuseteil (15, 15', 15") zumindest bereichsweise ein, insbesondere glasfaserverstärktes, Thermoplastmaterial und/oder Duroplastmaterial umfaßt, vorzugsweise im wesentlichen vollständig aus einem, insbesondere glasfaserverstärkten, Thermoplastmaterial und/oder Duroplastmaterial besteht.

16. Kunststoffturboladergehäuse nach einem der Ansprüche 12 bis 15, **dadurch gekennzeichnet, daß**
das dritte Gehäuseteil (15, 15', 15") mit dem ersten Gehäuseteil (7, 7', 7"), dem zweiten Gehäuseteil, zumindest einem Einzelelement, insbesondere dem ersten Einzelelement (7a, 7a', 7a"), dem zweiten Einzelelement, dem dritten Einzelelement und/oder dem vierten Einzelelement, dem Duroplastkörper (11, 11"), dem Thermoplastkörper (20") und/oder dem Thermoplast mittels zumindest eines dritten Verbindungselements (13, 13', 13") verbindbar ist.

17. Kunststoffturboladergehäuse nach Anspruch 16, **dadurch gekennzeichnet, daß**
das dritte Verbindungselement zumindest eine in dem ersten Gehäuseteil, dem zweiten Gehäuseteil, zumindest einem Einzelelement, insbesondere dem ersten Einzelelement, dem zweiten Einzelelement, dem dritten Einzelelement und/oder dem vierten Einzelelement, dem Duroplastkörper, dem Thermoplastkörper und/oder dem Thermoplast ausgebildete zweite Vertiefung (27, 27', 27") umfaßt und in der zweiten Vertiefung (27, 27', 27") zumindest ein Bereich des dritten Gehäuseteils aufnehmbar ist, wobei vorzugsweise die zweite Vertiefung (27, 27', 27") der ersten Vertiefung entspricht.

18. Kunststoffturboladergehäuse nach Anspruch 16 und 17, **dadurch gekennzeichnet, daß**
das dritte Verbindungselement zumindest in dem ersten Gehäuseteil, dem zweiten Gehäuseteil, zumindest einem Einzelelement, insbesondere dem ersten Einzelelement, dem zweiten Einzelelement, dem dritten Einzelelement und/oder dem vierten Einzelelement, dem Duroplastkärper (11,11'), dem Thermoplastkörper (20") und/oder dem Thermoplast ausgebildetes erstes Befestigungsmittel (43) umfaßt, wobei zumindest ein Befestigungselement (13, 13', 13") mit dem ersten Befestigungsmittel (43) in Wechselwirkung bringbar ist, insbesondere mit dem ersten Befestigungsmittel (43) verbindbar ist und das dritte Gehäuseteil (15,15',15") ein mit dem Befestigungselement (13, 13', 13") in Wechselwirkung bringbares, insbesondere mit dem Befestigungselement verbindbares, zweites Befestigungsmittel umfaßt.

19. Kunststoffturboladergehäuse nach Anspruch 18, **dadurch gekennzeichnet, daß**
das erste Befestigungsmittel zumindest eine erste Öffnung (43) und/oder eine erste Halterung in dem ersten Gehäuseteil, dem zweiten Gehäuseteil, zumindest einem Einzelelement, insbesondere dem ersten Einzelelement, dem zweiten Einzelelement, dem dritten Einzelelement und/oder dem vierten Einzelelement, dem Duroplastkärper (11,11'), dem Thennoplastkörper (20") und/oder Thermoplast umfaßt und das zweite Befestigungsmittel eine zweite, insbesondere mit der ersten Öffnung fluchtende, zweite Öffnung und/oder zweite Halterung in dem dritten Gehäuseteil umfaßt, insbesondere das Befestigungselement (13, 13', 13") in die erste Öffnung (43) und die zweite Öffnung zumindest bereichsweise einbringbar ist, wobei insbesondere die erste und/oder die zweite Öffnung und/oder die erste und/oder die zweite Halterung zumindest eine Bohrung, zumindest ein Loch, zumindest ein Sackloch (43) und/oder zumindest ein Gewinde umfaßt bzw. umfassen und/oder das Befestigungselement zumindest eine Nietverbindung, Schraubverbindung (13, 13', 13"), Rastverbindung, Steckverbindung, Adhäsionsverbindung und/oder Klipsverbindung umfaßt, wobei vorzugsweise das Gewinde durch Verbindung des Befestigungselements, insbesondere in Form einer selbstschneidenden Schraube (13, 13', 13"), ausbildbar ist.

20. Kunststoffturboladergehäuse nach einem der Ansprüche 16 bis 19, **dadurch gekennzeichnet, daß**
das dritte Gehäuseteil (15, 15', 15") im Bereich des dritten Verbindungselements (13, 13', 13", 43), insbesondere im Bereich des ersten Befestigungsmittels (43) und/oder des zweiten Befestigungsmittels, direkt mit dem ersten Gehäuseteil (7, 7', 7"), dem zweiten Gehäuseteil, dem ersten Einzelelement (7a, 7a', 7a"), dem zweiten Einzelelement, dem dritten Einzelelement, dem vierten Einzelelement, und/oder dem Duroplastkörper (11,11') in Kontakt steht.

21. Kunststoffturboladergehäuse nach einem der vorangehenden Ansprüche, **dadurch gekenzeichnet, daß**
das erste Gehäuseteil (7") mit dem zweiten Gehäuseteil (9"), insbesondere zumindest ein Einzelelement des ersten Gehäuseteils (7"), vorzugsweise das erste Einzelelement und/oder das zweite Einzelelement (7b"), mit zumindest einem Einzelelement des zweiten Gehäuseteils (9"), vorzugsweise dem dritten Einzelelement und/oder dem vierten Einzelelement, mittels zumindest eines vierten Verbindungselements (22") verbindbar ist.

22. Kunststoffturboladergehäuse nach einem der vorangehenden Ansprüche, **dadurch gekennzeichnet, daß**
zumindest zwei Einzelelemente des ersten Gehäuseteils, insbesondere das erste Einzelelement und das zweite Einzelelement, mittels zumindest eines fünften Verbindungselementes miteinander verbindbar sind und/oder zumindest zwei Einzelelemente des zweiten Gehäuseteils, insbesondere das dritte Einzelelement und das vierte Einzelelement, mittels zumindest eines sechsten Verbindungselementes miteinander verbindbar sind.

23. Kunststoffturboladergehäuse nach Anspruch 22, **dadurch gekennzeichnet, daß**
das vierte Verbindungselement, das fünfte Verbindungselement und/oder das sechste Verbindungselement zumindest eine Nietverbindung, zumindest eine Schraubverbindung (22"), zumindest eine Klipsverbinaung, zumindest eine Rastverbindung, zumindest eine Feder/Nut-Verbindung, zumindest eine Steckverbindung und/oder zumindest eine Adhäsionsverbindung umfaßt.

24. Kunststoffturboladergehäuse nach einem der Ansprüche 4 bis 23, **dadurch gekennzeichnet, daß**
das erste Verankerungselement, das zweite Verankerungselement und/oder das dritte Verankerungselement zumindest eine Vertiefung, wie zumindest einen Hinterschnitt (35, 35',35",41,41, 41") und/oder zumindest eine Nut, zumindest eine Erhebung (37, 37', 37" 39, 39', 39"), wie zumindest einen Steg, zumindest einen Oberflächenbereich mit einer im Vergleich zu der im wesentlichen restlichen ersten, zweiten, dritten und/oder vierten Oberfläche erhöhten Oberflächenrauhigkeit und/oder zumindest eine Durchbrechung der ersten, zweiten, dritten und/oder vierten Oberfläche umfaßt, wobei vorzugsweise die Vertiefung und/oder die Durchbrechung im wesentlichen vollständig mit dem Duroplastkörper, dem Thermoplastkörper und/oder dem Thermoplast aufgefüllt ist, der Steg im wesentlichen allseitig von dem Duroplastkörper (11, 11'), dem Thermoplastkörper (20") und/oder dem Thermoplast (19, 19') bedeckt ist und/oder der Oberflächenbereich im wesentlichen vollständig von dem Duroplastkörper, dem Thermoplastkörper (20") und/oder dem Thermoplast bedeckt ist.

25. Kunststoffturboladergehäuse nach einem der vorangehenden Ansprüche, **gekennzeichnet durch**
zumindest ein von dem ersten Gehäuseteil (7, 7', 7") umfaßtes erstes Abdichtelement (31, 31', 31"), zumindest ein von dem zweiten Gehäuseteil umfaßtes zweites Abdichtelement (32"), zumindest ein von dem dritten Gehäuseteil (15, 15', 15") umfaßtes drittes Abdichtelement (33, 33', 33", 49, 49', 49"), zumindest ein von dem ersten Einzelelement (7a, 7a', 7a") umfaßtes viertes Abdichtelement (31,31',31 "), zumindest ein von dem zweiten Einzelelement umfaßtes fünftes Abdichtelement, zumindest ein von dem dritten Einzelelement umfaßtes sechstes Abdichtelement und/oder zumindest ein von dem vierten Einzelelement umfaßtes siebtes Abdichtelernent, wobei vorzugsweise das erste Abdichtelement (31, 31', 31"), das zweite Abdichtelement (32"), das dritte Abdichtelement (33, 33', 33", 49, 49', 49"), das vierte Abdichtelement, das fünften Abdichtelement, das sechste Abdichtelement und/oder das siebte Abdichtelement zumindest teilweise im Bereich zumindest einer Kontaktfläche des ersten Gehäuseteils (7, 7', 7"), des zweiten Gehäuseteils (9"), des dritten Gehäuseteils (15, 15', 15"), des ersten Einzelelements (7a, 7a', 7a"), des zweiten Einzelelements, des dritten Einzelelements, und/oder des vierten Einzelelements mit dem ersten Gehäuseteil (7, 7', 7"), dem zweiten Gehäuseteil (9,9',9"), dem dritten Gehäuseteil (15, 15', 15"), dem ersten Einzelelement (7a, 7a', 7a"), dem zweiten Einzelelement (7b, 7b', 7b"), dem dritten Einzelelement, dem vierten Einzelelement, dem Duroplastkörper (11, 11'), dem Thermoplastkörper (20") und/oder dem Thermoplast (19, 19') angeordnet ist bzw. sind.

26. Kunststoffturboladergehäuse nach Anspruch 25, **dadurch gekennzeichnet, daß**
das erste Abdichtelement (31, 31', 31 "), das zweite Abdichtelement (32"), das dritte Abdichtelement (33, 33', 33", 49, 49', 49"), das vierte Abdichtelement (31, 31', 31 "), das fünfte Abdichtelement, das sechste Abdichtelement und/oder das siebte Abdichtelement zumindest eine Vertiefung, insbesondere zur Aufnahme zumindest eines Dichtungselementes, wie eines O-Rings und/oder zumindest einer Dichtungsmasse, vorzugsweise zumindest bereichsweise umfassend Silikon, umfaßt bzw. umfassen.

27. Verfahren zur Herstellung eines Kunststoffturboladergehäuses (1, 1', 1") insbesondere nach einem der Ansprüche 1 bis 26, bei dem zumindest ein zumindest bereichsweise Duroplast umfassendes erstes Gehäuseteil (7, 7', 7") und zumindest ein zumindest bereichsweise Duroplast umfassendes zweites Gehäuseteil (9,9', 9") bereitgestellt werden, wobei das erste Gehäuseteil (7, 7', 7") und/oder das zweite Gehäuseteil zumindest zwei Einzelelemente (7a, 7b, 7a', 7b', 7a", 7b") umfaßt bzw. umfassen, **dadurch gekennzeichnet, daß**
die Einzelelemente (7a, 7b, 7a', 7b', 7a", 7b") des ersten Gehäuseteils (7, 7', 7") zur Bildung des ersten Gehäuseteils (7, 7', 7") und/oder die Einzelelemente des zweiten Gehäuseteils zur Bildung des zweiten Gehäuseteils relativ zueinander angeordnet werden, das erste Gehäuseteil (7, 7', 7") und das zweite Gehäuseteil (9, 9', 9") relativ zueinander angeordnet werden und das erste Gehäuseteil (7, 7', 7") und das zweite Gehäuseteil (9, 9', 9") und die Einzelelemente (7a, 7b, 7a', 7b', 7a", 7b") miteinander verbunden werden, indem das erste Gehäuseteil (7, 7') und das zweite Gehäuseteil (9,9', 9") mit zumindest einem Duroplastkörper (11, 11') oder zumindest einem Thermoplastkörper (20") umspritzt werden.

28. Verfahren nach Anspruch 27, **dadurch gekennzeichnet, daß**
das erste Gehäuseteil (7, 7', 7"), das zweite Gehäuseteil (9,9',9"), zumindest ein Einzelelement (7a, 7b, 7a', 7b', 7a", 7b"), der Thermoplastkörper (20") und/oder der Duroplastkörper (11, 11'), insbesondere bei Verbindung des ersten Gehäuseteils (7, 7', 7") und des zweiten Gehäuseteils (9, 9', 9") und der Einzelelemente (7a, 7a', 7a", 7b, 7b', 7b", 9,9',9") durch Umspritzung mit dem Duroplastkörper (11,11'), zumindest teilweise, mit zumindest einem Thermoplast (19, 19') haubenartig überdeckt wird bzw. werden, wobei vorzugsweise zumindest eine Wandung zumindest einer in dem ersten Gehäuseteil (7, 7', 7"), dem zweiten Gehäuseteil und/oder zumindest einem Einzelelement (7a, 7a', 7a") ausgebildeten Vertiefung (27, 27') zumindest bereichsweise mit dem Thermoplast (19, 19') bedeckt wird.

29. Verfahren nach Anspruch 27 oder 28, **dadurch gekennzeichnet, daß**
auf zumindest einer ersten Oberfläche und/oder im Bereich zumindest einer Endkante des ersten Gehäuseteils (7, 7', 7") des zweiten Gehäuseteils (9, 9' ,9") und/oder zumindest eines Einzelelements (7a, 7b, 7a', 7b', 7a,", 7b"), insbesondere während der Herstellung des ersten Gehäuseteils (7, 7', 7"), des zweiten Gehäuseteils (9, 9', 9") und/oder des Einzelelements (7a, 7b, 7a', 7b', 7a", 7b") zumindest ein erstes Verankerungselement (35, 35', 35", 37, 37', 37", 39, 39', 39") ausgebildet wird, wobei vorzugsweise zumindest eine zweite Oberfläche des ersten Verankerungselements (35, 35', 35", 37, 37', 37", 39, 39', 39") zumindest bereichsweise, insbesondere vollständig, von dem Duroplastkörper (11, 11') oder dem Thermoplastkörper (20") bedeckt wird.

30. Verfahren nach einem der Ansprüche 27 bis 29, **dadurch gekennzeichnet, daß**
auf zumindest einer dritten Oberfläche des ersten Gehäuseteils, des zweiten Gehäuseteils, zumindest eines Einzelelements und/oder des Duroplastkörpers (11,11') zumindest ein zweites Verankerungselement (41, 41', 41") ausgebildet wird, wobei vorzugsweise zumindest eine vierte Oberfläche des zweiten Verankerungselements (41, 41', 41") zumindest bereichsweise, insbesondere vollständig, von dem Thermoplastkörper (20") oder dem Thermoplast (19, 19') bedeckt wird.

31. Verfahren nach einem der Ansprüche 27 bis 30, **dadurch gekennzeichnet, daß**
zumindest ein erstes Fluidleitelement mit zumindest einem Fluidansaugstutzen (3, 3', 3"), zumindest einem Verdichterkanal (29, 29', 29") und/oder zumindest einem Fluidaustrittsstutzen (5, 5', 5") des Kunststoffverdichtergehäuses (1, 1', 1") verbunden wird, wobei das erste Fluidleitelement zumindest bereichsweise von dem Thermoplastkörper und/oder dem Thermoplast (19,19') überdeckt wird.

32. Verfahren nach einem der Ansprüche 27 bis 31, **dadurch gekennzeichnet, daß**
zumindest ein drittes Gehäuseteil (15, 15', 15"), insbesondere mittels zumindest eines Befestigungselements (13, 13', 13"), mit dem ersten Gehäuseteil (7, 7', 7"), dem zweiten Gehäuseteil, zumindest einem Einzelelement, dem Thermoplastkörper (20") und/oder dem Duroplastkörpers (11, 11') verbunden wird, wobei das dritte Gehäuseteil (15, 15',15") vorzugsweise zumindest bereichsweise in zumindest einer zweiten Vertiefung (27, 27', 27"), insbesondere der ersten Vertiefung, aufgenommen wird.

33. Verfahren nach einem der Ansprüche 27 bis 32, **daadurch gekennzeichnet, daß**
in dem ersten Gehäuseteil (7, 7', 7") zumindest ein erstes Abdichtelement (31, 31', 31"), in dem zweiten Gehäuseteil zumindest ein zweites Abdichtelement (32"), in dem dritten Gehäuseteil (15, 15', 15") zumindest ein drittes Abdichtelement (33, 33', 33", 49,49', 49") und/oder in zumindest einem Einzelelement (7a, 7a', 7a") zumindest ein viertes Abdichtelement (31,31 31 ") ausgebildet wird.

34. Verfahren nach einem der Ansprüche 27 bis 33, **dadurch gekennzeichnet, daß**
das erste Gehäuseteil (7, 7', 7") und das zweite Gehäuseteil (9, 9', 9") mittels zumindest eines vierten Verbindungselementes (22"), zumindest zwei Einzelelemente des ersten Gehäuseteils mittels zumindest eines fünften Verbindungselementes, zumindest zwei Einzelelemente des zweiten Gehäuseteils und/oder zumindest ein Einzelelement des ersten Gehäuseteils und zumindest ein Einzelelement des zweiten Gehäuseteils miteinander verbunden werden, insbesondere vor einer Umspritzung mit dem Duroplastkörper (11,11'), dem Thermoplastkörper (20") und/oder dem Thermoplast (19, 19').

35. Turbolader umfassend ein Kunststoffturboladergehäuse (1, 1', 1") nach einem der Ansprüche 1 bis 26.

## Claims

1. A plastic turbocharger casing (1, 1', 1 ") with at least one first casing part (7,7'7") and at least one second casing part (9, 9', 9"), each of them comprising, at least in certain areas, at least one thermosetting plastic material, wherein the first casing part (7, 7', 7") and/or the second casing part comprise/comprises at least two individual elements (7a, 7b, 7a', 7b', 7a", 7b"), **characterized in that** at least one thermosetting plastic body (11, 11') or at least one thermoplastic body (20") is injection-moulded around at least certain areas of the first casing part (7, 7', 7") and the second casing part (9,9',9") in such a manner that the first casing part (7, 7', 7"), the second casing part (9,9',9") and the individual elements (7a, 7b, 7a', 7b', 7a", 7b") of the first casing part and/or of the second casing part (9,9'9") each contact the thermosetting plastic body (11, 11') or the thermoplastic body (20") at least in certain areas.

2. A plastic turbocharger casing according to claim 1, **characterized in that** the first casing part (7, 7', 7") comprises at least one first individual element, preferably in the form of at least one first inner part (7a, 7a', 7a"), and/or a second individual element, preferably in the form of at least one upper shell (7b, 7b', 7b"), said first inner part (7a, 7a', 7a") particularly at least partially providing or delimiting at least one helical inner contour and/or at least one compressor duct.

3. A plastic turbocharger casing according to claim 1 or 2, **characterized in that** the second casing part comprises at least one third individual element, preferably in the form of at least one second inner part, and/or a fourth individual element, preferably in the form of at least one lower shell (9, 9', 9"), said second inner part particularly at least partially providing or delimiting at least one helical inner contour and/or at least one compressor duct.

4. A plastic turbocharger casing according to any one of the preceding claims, **characterized in that** the first casing part (7, 7', 7"), the second casing part (9,9',9") and/or at least one individual element, particularly the first individual element (7a, 7a', 7a"), the second individual element (7b, 7b', 7b"), the third individual element and/or the fourth individual element, comprise/comprises at least one first anchoring element (35, 35', 35", 37, 37', 37", 39, 39', 39"), particularly on at least one first surface and/or in the region of at least one end edge, wherein preferably at least one second surface of the first anchoring element (35, 35', 35", 37, 37', 37", 39, 39', 39") is covered with the thermosetting plastic body (11, 11') or the thermoplastic body (20") at least in certain areas and in particular completely.

5. A plastic turbocharger casing according to any one of the preceding claims, **characterized in that**, particularly when the thermosetting plastic body (11, 11') is injection-moulded around the first casing part (7, 7', 7") and the second casing part (9,9',9"), the first casing part (7, 7', 7"), the second casing part (9, 9', 9"), at least one individual element, particularly the first individual element (7a, 7a', 7a"), the second individual element (7b, 7b', 7b"), the third individual element and/or the fourth individual element, the thermoplastic body (20") and/or the thermosetting plastic body (11, 11') are/is at least partially covered with at least one thermoplastic (19, 19') in such a manner that the thermoplastic (19, 19') forms a hood.

6. A plastic turbocharger casing according to any one of the preceding claims, **characterized in that** at least one second anchoring element (41, 41', 41 ") is formed on at least one third surface of the first casing part, of the second casing part, of at least one individual element, particularly of the first individual element, of the second individual element, of the third individual element and/or of the fourth individual element, and/or of the thermosetting plastic body (11, 11'), wherein preferably at least one fourth surface of the second anchoring element (41, 41', 41") is covered with the thermoplastic (19, 19') or the thermoplastic body (20") at least in certain areas and in particular completely.

7. A plastic turbocharger casing according to any one of the preceding claims, **characterized in that** the first casing part (7, 7', 7"), the second casing part (9,9',9"), at least one individual element (7a, 7a', 7a"), particularly the first individual element (7b, 7b', 7b"), the second individual element, the third individual element and/or the fourth individual element, the thermosetting plastic body, the thermoplastic body (20") and/or the thermoplastic provide/provides, at least in certain areas, at least one fluid intake connecting piece, particularly an air intake connecting piece (3, 3', 3 "), at least one compressor duct (29, 29', 29") and/or, at least in certain areas, at least one fluid outlet connecting piece, particularly an air outlet connecting piece (5, 5', 5 ").

8. A plastic turbocharger casing according to any one of the preceding claims, **characterized in that** at least one first fluid-conveying element connectable to the fluid intake connecting piece (3, 3', 3"), to the compressor duct (29, 29', 29") and/or to the fluid outlet connecting piece (5, 5', 5 ") is covered with the thermoplastic body (20") or the thermoplastic (19, 19') at least in certain areas, said first fluid-conveying element particularly comprising at least one fluid filter element, at least one conduit element, such as a fluid pipe, and/or at least one damping element, such as a charge air damper, wherein at least one third anchoring element is formed preferably on at least one fifth surface of the first fluid-conveying element, said fifth surface being covered particularly with the thermoplastic body (20") or the thermoplastic (19, 19') at least in certain areas, and/or at least one surface of the fluid intake connecting piece, of the compressor duct and/or of the fluid outlet connecting piece forms the first surface, said surface of the fluid intake connecting piece, of the compressor duct and/or of the fluid outlet connecting piece being covered particularly with the thermoplastic at least in certain areas.

9. A plastic turbocharger casing according to claim 8, **characterized in that** the first fluid-conveying element comprises a plastic material and/or a metal at least in certain areas.

10. A plastic turbocharger casing according to any one of the preceding claims, **characterized in that** at least one first recess (27, 27', 27") is formed in the first casing part (7,7',7"), in the second casing part, in at least one individual element, particularly in the first individual element (7a, 7a', 7a"), in the second individual element, in the third individual element and/or in the fourth individual element, and/or in the thermosetting plastic body (11, 11'), wherein preferably at least one wall of the first recess (27, 27',27") is covered with the thermoplastic (19, 19') or the thermoplastic body (20") at least in certain areas, said wall facing particularly the compressor duct (29, 29',29").

11. A plastic turbocharger casing according to claim 10, **characterized in that** the first recess (27, 27', 27") is arranged adjacent to the compressor duct (29, 29', 29") at least in certain areas and/or is arranged between the compressor duct (29, 29', 29") and the fluid intake connecting piece (3, 3', 3 ") at least in certain areas.

12. A plastic turbocharger casing according to any one of the preceding claims, **characterized in that** the first casing part (7, 7', 7"), the second casing part (9,9',9"), at least one individual element, particularly the first individual element (7a, 7a', 7a"), the second individual element (7b, 7b', 7b"), the third individual element and/or the fourth individual element, the thermosetting plastic body (11, 11'), the thermoplastic body (20"), the thermoplastic and/or the first fluid-conveying element are/is connectable to at least one third casing part (15, 15', 15 ").

13. A plastic turbocharger casing according to claim 12, **characterized in that** the first casing part (7, 7', 7"), the second casing part (9, 9', 9"), the third casing part (15, 15') at least partially comprises at least one functional component of the plastic compressor casing (1, 1', 1 ") and/or of a compressor comprising the plastic compressor casing (1, 1', 1 "), particularly the fluid intake connecting piece (3, 3', 3 ") at least in certain areas, at least one first connecting element for connecting at least one second fluid-conveying element, such as a fluid tube and/or an air tube, to the fluid intake connecting piece (3, 3', 3 "), the fluid outlet connecting piece (5, 5', 5 ") at least in certain areas, at least one second connecting element for connecting at least one third fluid-conveying element, such as a fluid tube and/or an air tube, to the fluid outlet connecting piece (5, 5', 5 "), at least one connecting conduit (57',59',57",59") being particularly in fluidal connection with the fluid intake connecting piece (3, 3', 3"), with the compressor duct (29, 29', 29 ") and/or with the fluid outlet connecting piece (5, 5', 5"), and/or at least one valve device (17, 17', 17") being in operative connection particularly with the connecting conduit, and/or at least one actuator, preferably for controlling a pressure within the compressor.

14. A plastic turbocharger casing according to claim 1, **characterized in that** an at least indirect fluidal connection between the fluid intake connecting piece (3 ") and the fluid outlet connecting piece (5 "), the compressor duct (29, 29') and the fluid intake connecting piece (3,3'), the compressor duct and the fluid outlet connecting piece and/or an ambient atmosphere on the one hand and the fluid intake connecting piece (3 "), the compressor duct (29, 29') and/or the fluid outlet connecting piece (5 ") on the other hand is establishable by means of the connecting conduit (57',59',57",59"), wherein preferably the connection is controllable, in an open and/or a closed loop, by means of the valve device (17, 17', 17") and the valve device is particularly designed as a blow-off valve.

15. A plastic turbocharger casing according to any one of claims 12 to 14, **characterized in that** the third casing part (15, 15', 15 ") comprises a, in particular glass-fiber reinforced, thermoplastic material and/or thermosetting plastic material at least in certain areas and preferably essentially completely consists of a, in particular glass-fiber reinforced, thermoplastic material and/or thermosetting plastic material.

16. A plastic turbocharger casing according to any one of claims 12 to 15, **characterized in that** the third casing part (15,15',15") is connectable to the first casing part (7,7',7"), to the second casing part, to at least one individual element, particularly to the first individual element (7a, 7a', 7a"), to the second individual element, to the third individual element and/or to the fourth individual element, to the thermosetting plastic body (11), to the thermoplastic body (20") and/or to the thermoplastic by means of at least one third connecting element (13, 13', 13 ").

17. A plastic turbocharger casing according to claim 16, **characterized in that** the third connecting element comprises at least one second recess (27, 27',27") formed in the first casing part, in the second casing part, in at least one individual element, particularly in the first individual element, in the second individual element, in the third individual element and/or in the fourth individual element, in the thermosetting plastic body, in the thermoplastic body and/or in the thermoplastic, and that at least one region of the third casing part is receivable in the second recess (27, 27', 27"), wherein preferably the second recess (27, 27',27") corresponds to the first recess.

18. A plastic turbocharger casing according to claim 16 and 17, **characterized in that** the third connecting element comprises at least one first fastening means (43) formed in the first casing part, in the second casing part, in at least one individual element, particularly in the first individual element, in the second individual element, in the third individual element and/or in the fourth individual element, in the thermosetting plastic body (11, 11'), in the thermoplastic body (20") and/or in the thermoplastic, wherein at least one fastening element (13, 13', 13 ") can be made to interact with, particularly is connectable to, the first fastening means (43) and the third casing part (15,15',15") comprises a second fastening means that can be made to interact with, particularly is connectable to, the fastening element (13, 13', 13 ").

19. A plastic turbocharger casing according to claim 18, **characterized in that** the first fastening means comprises at least one first aperture (43) and/or a first mounting in the first casing part, in the second casing part, in at least one individual element, particularly in the first individual element, in the second individual element, in the third individual element and/or in the fourth individual element, in the thermosetting plastic body (11, 11'), in the thermoplastic body (20") and/or in the thermoplastic, and the second fastening means comprises a second aperture and/or second mounting in the third casing part, said fastening element (13, 13', 13 ") being in particular insertable into the first aperture (43) and into the second aperture at least in certain areas, said second aperture being in particular in alignment with the first aperture, wherein particularly the first aperture and/or the second aperture and/or the first mounting and/or the second mounting comprise/comprises at least one bore, at least one hole, at least one blind hole (43) and/or at least one thread, and/or the fastening element comprises at least one riveted connection, screwed connection (13, 13', 13 "), snap-in connection, plug-in connection, adhesive connection and/or clip connection, wherein preferably the thread is formable by connecting the fastening element, particularly in the form of a tapping screw (13, 13', 13 ").

20. A plastic turbocharger casing according to any one of claims 16 to 19, **characterized in that** the third casing part (15, 15', 15 ") directly contacts the first casing part (7, 7', 7"), the second casing part, the first individual element (7a, 7a', 7a"), the second individual element, the third individual element, the fourth individual element and/or the thermosetting plastic body (11, 11') in the region of the third connecting element (13, 13', 13", 43), particularly in the region of the first fastening means (43) and/or of the second fastening means.

21. A plastic turbocharger casing according to any one of the preceding claims, **characterized in that** the first casing part (7") is connectable to the second casing part (9"), particularly at least one individual element of the first casing part (7"), preferably the first individual element and/or the second individual element (7b"), to at least one individual element of the second casing part (9"), preferably to the third individual element and/or to the fourth individual element, by means of at least one fourth connecting element (22").

22. A plastic turbocharger casing according to any one of the preceding claims, **characterized in that** at least two individual elements of the first casing part, particularly the first individual element and the second individual element, are connectable to each other by means of at least one fifth connecting element, and/or that at least two individual elements of the second casing part, particularly the third individual element and the fourth individual element, are connectable to each other by means of at least one sixth connecting element.

23. A plastic turbocharger casing according to claim 22, **characterized in that** the fourth connecting element, the fifth connecting element and/or the sixth connecting element comprises at least one riveted connection, at least one screwed connection (22"), at least one clip connection, at least one snap-in connection, at least one key-and-slot connection, at least one plug-in connection and/or at least one adhesive connection.

24. A plastic turbocharger casing according to any one of claims 4 to 23, **characterized in that** the first anchoring element, the second anchoring element and/or the third anchoring element comprises at least one recess, such as at least one undercut (35, 35', 35", 41, 41', 41 ") and/or at least one groove, at least one elevation (37, 37', 37", 39, 39', 39"), such as at least one web, at least one surface region having a surface roughness that is increased in comparison with the essentially remaining first, second, third and/or fourth surface, and/or at least one opening in the first, second, third and/or fourth surface, wherein preferably the recess and/or the opening is essentially completely filled up with the thermosetting plastic body, the thermoplastic body and/or the thermoplastic, the web is essentially covered all over with the thermosetting plastic body (11, 11'), the thermoplastic body (20") and/or the thermoplastic (19, 19'), and/or the surface region is essentially completely covered with the thermosetting plastic body, the thermoplastic body (20") and/or the thermoplastic.

25. A plastic turbocharger casing according to any one of the preceding claims, **characterized by** at least one first sealing element (31, 31', 31 ") comprised by the first casing part (7, 7', 7"), at least one second sealing element (32") comprised by the second casing part, at least one third sealing element (33, 33', 33", 49, 49', 49") comprised by the third casing part (15, 15', 15 "), at least one fourth sealing element (31, 31', 31") comprised by the first individual element (7a, 7a', 7a"), at least one fifth sealing element comprised by the second individual element, at least one sixth sealing element comprised by the third individual element and/or at least one seventh sealing element comprised by the fourth individual element, wherein preferably the first sealing element (31, 31', 31"), the second sealing element (32"), the third sealing element (33, 33', 33", 49, 49', 49"), the fourth sealing element, the fifth sealing element, the sixth sealing element and/or the seventh sealing element are/is at least partially arranged in the region of at least one contact surface of the first casing part (7, 7', 7"), of the second casing part (9"), of the third casing part (15, 15', 15 "), of the first individual element (7a, 7a', 7a"), of the second individual element, of the third individual element and/or of the fourth individual element with the first casing part (7, 7', 7"), with the second casing part (9, 9', 9"), with the third casing part (15, 15', 15 "), with the first individual element (7a, 7a', 7a"), with the second individual element (7b, 7b', 7b"), with the third individual element, with the fourth individual element, with the thermosetting plastic body (11, 11'), with the thermoplastic body (20") and/or with the thermoplastic (19, 19').

26. A plastic turbocharger casing according to claim 25, **characterized in that** the first sealing element (31, 31', 31 "), the second sealing element (32"), the third sealing element (33, 33', 33", 49, 49', 49"), the fourth sealing element (31, 31', 31 "), the fifth sealing element, the sixth sealing element and/or the seventh sealing element comprise/comprises at least one recess, particularly for receiving at least one gasket element, such as an O-ring and/or at least one sealing compound, comprising silicone preferably at least in certain areas.

27. A method for manufacturing a plastic turbocharger casing (1, 1', 1 "), particularly according to any one of claims 1 to 26, in which at least one first casing part (7, 7', 7") comprising thermosetting plastic at least in certain areas and at least one second casing part (9, 9', 9") comprising thermosetting plastic at least in certain areas are provided, wherein the first casing part (7, 7', 7") and/or the second casing part comprise/comprises at least two individual elements (7a, 7b, 7a', 7b', 7a", 7b"), **characterized in that** the individual elements (7a, 7b, 7a', 7b', 7a", 7b") of the first casing part (7, 7', 7") are arranged relative to each other for forming the first casing part (7, 7', 7") and/or the individual elements of the second casing part are arranged relative to each other for forming the second casing part, the first casing part (7, 7', 7") and the second casing part (9, 9', 9") are arranged relative to each other, and the first casing part (7, 7', 7") and the second casing part (9,9',9") and the individual elements (7a, 7b, 7a', 7b', 7a", 7b") are connected to each other by injection-moulding at least one thermosetting plastic body (11, 11') or at least one thermoplastic body (20") around the first casing part (7, 7') and the second casing part (9, 9', 9").

28. A method according to claim 27, **characterized in that** particularly when connecting the first casing part (7, 7', 7") and the second casing part (9, 9', 9") and the individual elements (7a, 7a', 7a", 7b, 7b', 7b", 9, 9', 9") to each other by injection-moulding the thermosetting plastic body (11, 11') around them, the first casing part (7, 7', 7"), the second casing part (9,9',9"), at least one individual element (7a, 7b, 7a', 7b', 7a", 7b"), the thermoplastic body (20") and/or the thermosetting plastic body (11, 11') are/is at least partially covered with at least one thermoplastic (19, 19') in such a manner that the thermoplastic (19, 19') forms a hood, wherein preferably at least one wall of at least one recess (27, 27') formed in the first casing part (7, 7', 7"), in the second casing part and/or in at least one individual element (7a, 7a', 7a") is covered with the thermoplastic (19,19') at least in certain areas.

29. A method according to claim 27 or 28, **characterized in that** at least one first anchoring element (35, 35', 35", 37, 37', 37", 39, 39', 39") is formed on at least one first surface and/or in the region of at least one end edge of the first casing part (7, 7', 7"), of the second casing part (9,9',9") and/or of at least one individual element (7a, 7b, 7a', 7b', 7a", 7b"), particularly during the manufacturing of the first casing part (7, 7', 7"), of the second casing part (9,9',9") and/or of the individual element (7a, 7b, 7a', 7b', 7a", 7b"), wherein preferably at least one second surface of the first anchoring element (35, 35', 35", 37, 37', 37", 39, 39', 39") is covered with the thermosetting plastic body (11, 11') or the thermoplastic body (20") at least in certain areas and in particular completely.

30. A method according to any one of claims 27 to 29, **characterized in that** at least one second anchoring element (41, 41', 41 ") is formed on at least one third surface of the first casing part, of the second casing part, of at least one individual element and/or of the thermosetting plastic body (11, 11'), wherein preferably at least one fourth surface of the second anchoring element (41, 41', 41 ") is covered with the thermoplastic body (20") or the thermoplastic (19, 19') at least in certain areas and in particular completely.

31. A method according to any one of claims 27 to 30, **characterized in that** at least one first fluid-conveying element is connected to at least one fluid intake connecting piece (3, 3', 3 "), to at least one compressor duct (29, 29', 29") and/or to at least one fluid outlet connecting piece (5, 5', 5 ") of the plastic compressor casing (1, 1', 1 "), wherein the first fluid-conveying element is covered with the thermoplastic body and/or the thermoplastic (19, 19') at least in certain areas.

32. A method according to any one of claims 27 to 31, **characterized in that** at least one third casing part (15, 15', 15 ") is connected, particularly by means of at least one fastening element (13, 13', 13 "), to the first casing part (7, 7', 7"), to the second casing part, to at least one individual element, to the thermoplastic body (20 ") and/or to the thermosetting plastic body (11, 11 "), wherein the third casing part (15, 15', 15 ") is received, preferably at least in certain areas, in at least one second recess (27, 21',27"), particularly in the first recess.

33. A method according to any one of claims 27 to 32, **characterized in that** at least one first sealing element (31, 31', 31 ") is formed in the first casing part (7, 7', 7"), at least one second sealing element (32") is formed in the second casing part, at least one third sealing element (33, 33', 33", 49, 49', 49") is formed in the third casing part (15, 15', 15") and/or at least one fourth sealing element (31, 31', 31 ") is formed in at least one individual element (7a, 7a', 7a").

34. A method according to any one of claims 27 to 33, **characterized in that** the first casing part (7, 7', 7") and the second casing part (9, 9', 9") are connected to each other by means of at least one fourth connecting element (22"), at least two individual elements of the first casing part are connected to each other by means of at least one fifth connecting element, at least two individual elements of the second casing part and/or at least one individual element of the first casing part and at least one individual element of the second casing part are connected to each other, particularly before the thermosetting plastic body (11, 11'), the thermoplastic body (20") and/or the thermoplastic (19, 19') are/is injection-moulded around them.

35. A turbocharger, comprising a plastic turbocharger casing (1, 1', 1 ") according to any one of claims 1 to 26.

## Revendications

1. Carter de turbocompresseur en matière plastique (1, 1', 1") présentant au moins une première pièce de carter (7, 7', 7") et au moins une deuxième pièce de carter (9, 9', 9") comprenant chacune au moins par endroits au moins une matière thermodurcissable, la première pièce de carter (7, 7', 7") et/ou la deuxième pièce de carter comprenant au moins deux éléments isolés (7a, 7b, 7a', 7b', 7a", 7b"), **caractérisé en ce que**
la première pièce de carter (7, 7', 7") et la deuxième pièce de carter (9, 9', 9") sont surmoulées au moins par endroits avec au moins un corps en matière thermodurcissable (11, 11' ou au moins un corps en matière thermoplastique (20") de telle manière que la première pièce de carter (7, 7', 7"), la deuxième pièce de carter (9, 9', 9") et les éléments individuels (7a, 7b, 7a', 7b', 7a", 7b") de la première pièce de carter et/ou de la deuxième pièce de carter (9, 9', 9") sont respectivement en contact au moins par endroits avec un corps en matière thermodurcissable (11, 11' ou un corps en matière thermoplastique (20").

2. Carter de turbocompresseur en matière plastique selon la revendication 1, **caractérisé en ce que**
la première pièce de carter (7, 7', 7") comprend au moins un premier élément individuel, de préférence sous la forme d'au moins une première partie intérieure (7a, 7a', 7a"), en particulier fournissant ou délimitant au moins partiellement au moins un contour intérieur hélicoïdal et/ou au moins un canal de compresseur, et/ou un deuxième élément individuel, de préférence sous la forme d'au moins une coque supérieure (7b, 7b', 7b").

3. Carter de turbocompresseur en matière plastique selon la revendication 1 ou 2, **caractérisé en ce que**
la deuxième pièce de carter comprend au moins un troisième élément individuel, de préférence sous la forme d'au moins une deuxième partie intérieure, en particulier fournissant ou délimitant au moins partiellement au moins un contour intérieur hélicoïdal et/ou au moins un canal de compresseur, et/ou un quatrième élément individuel, de préférence sous la forme d'au moins une coque inférieure (9,9',9").

4. Carter de turbocompresseur en matière plastique selon l'une quelconque des revendications précédentes, **caractérisé en ce que**
la première pièce de carter (7, 7', 7"), la deuxième pièce de carter (9, 9', 9") et/ou au moins un élément individuel, en particulier le premier élément individuel (7a, 7a', 7a"), le deuxième élément individuel (7b, 7b', 7b"), le troisième élément individuel et/ou le quatrième élément individuel comprend/comprennent, en particulier sur au moins une première surface et/ou dans le secteur d'au moins un bord terminal, au moins un premier élément d'ancrage (35, 35', 35", 37, 37', 37", 39, 39', 39"), de préférence au moins une deuxième surface du premier élément d'ancrage (35, 35', 35", 37, 37', 37", 39, 39', 39") étant recouverte au moins par endroits, et en particulier en totalité, du corps en matière thermodurcissable (11, 11') ou du corps en matière thermoplastique (20").

5. Carter de turbocompresseur en matière plastique selon l'une quelconque des revendications précédentes, **caractérisé en ce que**
en particulier lors du surmoulage de la première pièce de carter (7, 7', 7") et de la deuxième pièce de carter (9, 9', 9") avec le corps en matière thermodurcissable (11, 11'), la première pièce de carter (7, 7', 7"), la deuxième pièce de carter (9, 9', 9"), au moins un élément individuel, en particulier le premier élément individuel (7a, 7a', 7a"), le deuxième élément individuel (7b, 7b', 7b"), le troisième élément individuel et/ou le quatrième élément individuel, le corps en matière thermoplastique (20") et/ou le corps en matière thermodurcissable (11, 11'), est/sont au moins partiellement recouvert(s) à la manière d'un capot par au moins un matériau thermoplastique (19, 19').

6. Carter de turbocompresseur en matière plastique selon l'une quelconque des revendications précédentes, **caractérisé en ce que**
au moins un deuxième élément d'ancrage (41, 41', 41") est formé sur au moins une troisième surface de la première pièce de carter, la deuxième pièce de carter, d'au moins un élément individuel, en particulier du premier élément individuel, du deuxième élément individuel, du troisième élément individuel et/ou du quatrième élément individuel, et/ou du corps en matière thermodurcissable (11, 11') de préférence au moins une quatrième surface du deuxième élément d'ancrage (41, 41', 41") étant recouverte au moins par endroits, et en particulier en totalité, par le matériau thermoplastique (19, 19') ou le corps en matière thermoplastique (20").

7. Carter de turbocompresseur en matière plastique selon l'une quelconque des revendications précédentes, **caractérisé en ce que**
la première pièce de carter (7, 7', 7"), la deuxième pièce de carter (9, 9', 9"), au moins un élément individuel (7a, 7a', 7a"), en particulier le premier élément individuel (7b, 7b', 7b"), le deuxième élément individuel, le troisième élément individuel et/ou le quatrième élément individuel, le corps en matière thermodurcissable, le corps en matière thermoplastique (20") et/ou le matériau thermoplastique fournisse(nt) au moins par endroits au moins un collecteur d'admission de fluide, en particulier un collecteur d'admission d'air (3, 3', 3"), au moins un canal de compresseur (29, 29', 29") et/au moins par endroits au moins un collecteur de sortie de fluide, en particulier un collecteur de sortie d'air (5, 5', 5").

8. Carter de turbocompresseur en matière plastique selon l'une quelconque des revendications précédentes, **caractérisé en ce que**
au moins un premier élément de conduction de fluide, pouvant être relié au collecteur d'admission de fluide (3, 3', 3"), au canal de compresseur (29, 29', 29") et/ou au collecteur de sortie de fluide (5, 5', 5") et comprenant en particulier au moins un élément de filtrage de fluide, au moins un élément de conduction comme une conduite pour fluide, et/ou au moins un élément d'amortissement comme un amortisseur d'air de suralimentation, est recouvert au moins par endroits par le corps en matière thermoplastique (20") ou le matériau thermoplastique (19, 19'), de préférence au moins un troisième élément d'ancrage étant formé sur au moins une cinquième surface, en particulier recouverte par endroits par le corps en matière thermoplastique (20") ou le matériau thermoplastique (19, 19'), du premier élément de conduction de fluide et/ou au moins une surface, en particulier recouverte au moins par endroits par le matériau thermoplastique du collecteur d'admission de fluide, du canal de compresseur et/ou du collecteur de sortie de fluide formant la première surface.

9. Carter de turbocompresseur en matière plastique selon la revendication 8, **caractérisé en ce que**
le premier élément de conduction de fluide comprend au moins par endroits une partie en matière plastique et/ou une partie métallique.

10. Carter de turbocompresseur en matière plastique selon l'une quelconque des revendications précédentes, **caractérisé en ce que**
au moins un premier renfoncement (27, 27', 27") est formé dans la première pièce de carter (7, 7', 7"), la deuxième pièce de carter, au moins un élément individuel, en particulier le premier élément individuel (7a, 7'a, 7a"), le deuxième élément individuel, le troisième élément individuel et/ou le quatrième élément individuel, et/ou le corps en matière thermodurcissable (11, 11'), de préférence au moins une paroi, tournée en particulier vers le canal de compresseur (29, 29', 29"), du premier renfoncement (27, 27', 27") étant recouverte au moins par endroits avec le matériau thermoplastique (19, 19") ou le corps en matière thermoplastique (20").

11. Carter de turbocompresseur en matière plastique selon la revendication 10, **caractérisé en ce que**
le premier renfoncement (27, 27', 27") est disposé au moins par endroits de manière adjacente au canal de compresseur (29, 29', 29") et/ou est disposé au moins par endroits entre le canal de compresseur (29, 29', 29") et le collecteur d'admission de fluide (3, 3', 3 ").

12. Carter de turbocompresseur en matière plastique selon l'une quelconque des revendications précédentes, **caractérisé en ce que**
la première pièce de carter (7, 7', 7"), la deuxième pièce de carter (9, 9', 9"), au moins un élément individuel, en particulier le premier élément individuel (7a, 7a', 7a"), le deuxième élément individuel (7b, 7b', 7b"), le troisième élément individuel et/ou le quatrième élément individuel, le corps en matière thermodurcissable (11, 11'), le corps en matière thermoplastique (20"), le matériau thermoplastique et/ou le premier élément de conduction de fluide peut/peuvent être relié(s) à au moins une troisième pièce de carter (15, 15', 15").

13. Carter de turbocompresseur en matière plastique selon la revendication 12, **caractérisé en ce que**
la première pièce de carter (7, 7', 7"), la deuxième pièce de carter (9, 9', 9"), la troisième pièce de carter (15, 15') comprend au moins partiellement au moins un composant fonctionnel du carter de compresseur en matière plastique (1, 1', 1") et/ou un compresseur comprenant le carter de compresseur en matière plastique (1,1',1"), en particulier comprend au moins par endroits le collecteur d'admission de fluide (3, 3', 3 "), au moins un premier élément de liaison destiné à la liaison d'au moins un deuxième élément de conduction de fluide, comme un flexible pour un fluide et/ou un flexible pour de l'air, avec le collecteur d'admission de fluide (3, 3', 3"), au moins par endroits le collecteur de sortie de fluide (5, 5', 5"), au moins un deuxième élément de liaison destiné à la liaison d'au moins un troisième élément de conduction de fluide, comme un flexible pour un fluide et/ou un flexible pour de l'air, avec le collecteur de sortie de fluide (5, 5', 5"), au moins une conduite de liaison (57', 59', 57", 59"), en particulier en liaison fluidique avec le collecteur d'admission de fluide (3, 3', 3"), le canal de compresseur (29, 29', 29") et/ou le collecteur de sortie de fluide (5, 5', 5"), et/ou au moins un dispositif formant vanne (17, 17', 17"), en particulier en liaison fonctionnelle avec la conduite de liaison, et/ou au moins un boîtier de commande, de préférence pour commander une pression à l'intérieur du compresseur.

14. Carter de turbocompresseur en matière plastique selon la revendication 1, **caractérisé en ce que**
une liaison fluidique au moins indirecte entre le collecteur d'admission de fluide (3") et le collecteur de sortie de fluide (5"), le canal de compresseur (29, 29') et le collecteur d'admission de fluide (3, 3'), le canal de compresseur et le collecteur de sortie de fluide et/ou une atmosphère ambiante d'une part et le collecteur d'admission de fluide (3"), le canal de compresseur (29, 29') et/ou le collecteur de sortie de fluide (5") d'autre part peut être réalisé au moyen de la conduite de liaison (57, 59', 57", 59"), la liaison pouvant de préférence être commandée et/ou régulée au moyen du dispositif formant vanne (17, 17', 17"), le dispositif formant soupape étant en particulier réalisé sous la forme d'une vanne de recirculation forcée d'air.

15. Carter de turbocompresseur en matière plastique selon l'une quelconque des revendications 2 à 14, **caractérisé en ce que**
la troisième pièce de carter (15, 15', 15") comprend au moins par endroits un matériau thermoplastique et/ou un matériau en matière thermodurcissable, en particulier renforcé par de la fibre de verre, et est constitué de préférence essentiellement en totalité d'un matériau thermoplastique et/ou d'un matériau en matière thermodurcissable, en particulier renforcé par de la fibre de verre.

16. Carter de turbocompresseur en matière plastique selon l'une quelconque des revendications 2 à 15, **caractérisé en ce que**
la troisième pièce de carter (15, 15', 15") peut être reliée à la première pièce de carter (7, 7', 7"), à la deuxième pièce de carter, à au moins un élément individuel, en particulier au premier élément individuel (7a, 7a', 7a"), au deuxième élément individuel, au troisième élément individuel et/ou quatrième élément individuel, au corps en matière thermodurcissable (11, 11"), au corps en matière thermoplastique (20") et/ou au matériau thermoplastique au moyen d'au moins un troisième élément de liaison (13, 13', 13").

17. Carter de turbocompresseur selon la revendication 16, **caractérisé en ce que**
le troisième élément de liaison comprend au moins un deuxième renfoncement (27, 27', 27") formé dans la première pièce de carter, la deuxième pièce de carter, au moins un élément individuel, en particulier le premier élément individuel, le deuxième élément individuel, le troisième élément individuel et/ou le quatrième élément individuel, le corps en matière thermodurcissable, le corps en matière thermoplastique et/ou dans le matériau thermoplastique, et au moins un secteur de la troisième pièce de carter peut être accueilli dans le deuxième renfoncement (27, 27', 27"), le deuxième renfoncement (27, 27', 27") correspondant de préférence au premier renfoncement.

18. Carter de turbocompresseur en matière plastique selon la revendication 16 et 17, **caractérisé en ce que**
le troisième élément de liaison comprend au moins un premier moyen de fixation (43) formé dans la première pièce de carter, la deuxième pièce de carter, au moins un élément individuel, en particulier le premier élément individuel, le deuxième élément individuel, le troisième élément individuel et/ou le quatrième élément individuel, le corps en matière thermodurcissable (11, 11'), le corps en matière thermoplastique (20") et/ou dans le matériau thermoplastique, au moins un élément de fixation (13, 13', 13") pouvant être placé en interaction avec le premier moyen de fixation (43) et pouvant être relié en particulier au premier moyen de fixation (43) et la troisième pièce de carter (15, 15', 15") comprenant un deuxième élément de fixation pouvant être placé en interaction avec l'élément de fixation (13, 13', 13"), en particulier pouvant être relié à l'élément de fixation.

19. Carter de turbocompresseur en matière plastique selon la revendication 18, **caractérisé en ce que**
le premier moyen de fixation comprend au moins une première ouverture (43) et/ou un premier support dans la première pièce de carter, la deuxième pièce de carter, au moins un élément individuel, en particulier le premier élément individuel, le deuxième élément individuel, le troisième individuel et/ou le quatrième individuel, le corps en matière thermodurcissable (11, 11') le corps en matière thermoplastique (20") et/ou dans le matériau thermoplastique et le deuxième moyen de fixation comprend une deuxième ouverture et/ou un deuxième support, en particulier aligné avec la première ouverture, dans la troisième pièce de carter, en particulier l'élément de fixation (13, 13', 13") peut être introduit au moins par endroits dans la première ouverture (43) et dans la deuxième ouverture, la première et/ou la deuxième ouverture et/ou le premier et/ou le deuxième support comprenant en particulier au moins un alésage, au moins un trou, au moins un trou borgne (43) et/ou au moins un filetage, et/ou l'élément de fixation comprenant au moins un assemblage par rivet, un assemblage par vis (13, 13', 13"), un assemblage par enclenchement, un assemblage par emboîtement, un assemblage par adhérence et/ou un assemblage par clipsage, le filetage étant de préférence réalisé par liaison de l'élément de fixation, en particulier sous la forme d'une vis autoforeuse (13, 13', 13").

20. Carter de turbocompresseur en matière plastique selon l'une quelconque des revendications 16 à 19, **caractérisé en ce que**
la troisième pièce de boîtier (15, 15', 15") est directement en contact avec la première pièce de carter (7, 7', 7"), la deuxième pièce de carter, le premier élément individuel (7, 7', 7"), le deuxième élément individuel, le troisième élément individuel, le quatrième élément individuel, et/ou le corps en matière thermodurcissable (11, 11") dans le secteur du troisième élément de liaison (13, 13', 13", 43), en particulier dans le secteur du premier moyen de fixation (43) et/ou du deuxième moyen de fixation.

21. Carter de turbocompresseur en matière plastique selon l'une quelconque des revendications précédentes, **caractérisé en ce que**
la première pièce de carter (7") peut être reliée à la deuxième pièce de carter (9"), en particulier au moins un élément individuel de la première pièce de carter (7"), de préférence le premier élément individuel et/ou le deuxième élément individuel (7b"), à au moins un élément individuel de la deuxième pièce de carter (9"), de préférence le troisième élément individuel et/ou le quatrième élément individuel, au moyen d'au moins un quatrième élément de liaison (22").

22. Carter de turbocompresseur en matière plastique selon l'une quelconque des revendications précédentes, **caractérisé en ce que**
au moins deux éléments individuels de la première pièce de carter, en particulier le premier élément individuel et le deuxième élément individuel peuvent être reliés ensemble au moyen d'au moins un cinquième élément de liaison et/ou au moins deux éléments individuels de la deuxième pièce de carter, en particulier le troisième élément individuel et le quatrième élément individuel, peuvent être reliés ensemble au moyen d'au moins un sixième élément de liaison.

23. Carter de turbocompresseur en matière plastique selon la revendication 22, **caractérisé en ce que**
le quatrième élément de liaison, le cinquième élément de liaison et/ou le sixième élément de liaison comprenne(nt) au moins un assemblage par rivet, au moins un assemblage par vis (22"), au moins un assemblage par clipsage, au moins un assemblage par enclenchement, au moins un assemblage mâle/femelle, au moins un assemblage par emboîtement et/ou au moins un assemblage par adhérence.

24. Carter de turbocompresseur en matière plastique selon l'une quelconque des revendications 4 à 23, **caractérisé en ce que**
le premier élément d'ancrage, le deuxième élément d'ancrage et/ou le troisième élément d'ancrage comprennent au moins un renfoncement, comme au moins une contre-dépouille (35, 35', 35", 41, 41', 41") et/ou au moins une rainure, au moins une saillie (37, 37', 37", 39, 39', 39"), comme au moins une entretoise, au moins un secteur superficiel avec une rugosité de surface augmentée par rapport aux première, deuxième, troisième et/ou quatrième surfaces essentiellement résiduelles et/ou au moins un ajourage des première, deuxième, troisième et/ou quatrième surfaces, le renfoncement et/ou l'ajourage étant de préférence rempli(s) essentiellement en totalité par le corps en matière thermodurcissable, le corps en matière thermoplastique et/ou le matériau thermoplastique, l'entretoise étant recouverte essentiellement de tout côté par le corps en matière plastique (11, 11'), le corps en matière thermoplastique (20") et/ou le matériau thermoplastique (19, 19') et/ou le secteur superficiel étant recouvert essentiellement en totalité par le corps en matière thermodurcissable, le corps en matière thermoplastique (20") et/ou le matériau thermoplastique.

25. Carter de turbocompresseur en matière plastique selon l'une quelconque des revendications précédentes, **caractérisé par**
au moins un premier élément d'étanchéité (31, 31', 31") compris dans la première pièce de carter (7, 7', 7"), au moins un deuxième élément d'étanchéité (32") compris dans la deuxième pièce de carter, au moins un troisième élément d'étanchéité (33, 33', 33", 49, 49', 49") compris dans la troisième pièce de carter (15, 15', 15"), au moins un quatrième élément d'étanchéité (31, 31', 31 ") compris dans le premier élément individuel (7a, 7a', 7a"), au moins un cinquième élément d'étanchéité compris dans le deuxième élément individuel, au moins un sixième élément d'étanchéité compris dans le troisième élément individuel et/ou au moins un septième élément d'étanchéité compris dans le quatrième élément individuel, le premier élément d'étanchéité (35, 35', 35"), le deuxième élément d'étanchéité (32"), le troisième élément d'étanchéité (33, 33', 33", 49, 49', 49"), le quatrième élément d'étanchéité, le cinquième élément d'étanchéité, le sixième élément d'étanchéité et/ou le septième élément d'étanchéité étant de préférence disposé(s) au moins partiellement dans le secteur d'au moins une surface de contact de la première pièce de carter (7, 7', 7"), de la deuxième pièce de carter (9"), de la troisième pièce de carter (15, 15', 15"), du premier élément individuel (7a, 7a', 7a"), du deuxième élément individuel, du troisième élément individuel, et/ou du quatrième élément individuel avec la première pièce de carter (7, 7', 7"), la deuxième pièce de carter (9, 9', 9"), la troisième pièce de carter (15, 15', 15"), le premier élément individuel (7a, 7a', 7a"), le deuxième élément individuel (7b, 7b', 7b"), le troisième élément individuel, le quatrième élément individuel, le corps en matière thermodurcissable (11, 11') le corps en matière thermoplastique (20") et/ou le matériau thermoplastique (19, 19').

26. Carter de turbocompresseur en matière plastique selon la revendication 25, **caractérisé en ce que** le premier élément d'étanchéité (31, 31', 31"), le deuxième élément d'étanchéité (32"), le troisième élément d'étanchéité (33, 33', 33", 49, 49', 49"), le quatrième élément d'étanchéité (31, 31', 31"), le cinquième élément d'étanchéité, le sixième élément d'étanchéité et/ou le septième élément d'étanchéité comprenne(nt) au moins un renfoncement, en particulier destiné à recevoir au moins un élément d'étanchéité, comme un joint rond et/ou au moins un joint étanche, de préférence comprenant au moins par endroits du silicone.

27. Procédé de fabrication d'un carter de turbocompresseur en matière plastique (1, 1', 1") en particulier selon l'une quelconque des revendications 1 à 26, dans lequel au moins une première pièce de carter (7, 7', 7") comprenant au moins par endroits une matière thermodurcissable, et au moins une deuxième pièce de carter (9, 9', 9") comprenant au moins par endroits une matière thermodurcissable sont fournis, la première pièce de carter (7, 7', 7") et/ou la deuxième pièce de carter comprenant au moins deux éléments individuels (7a, 7b, 7a', 7b', 7a", 7b"), **caractérisé en ce que**
les éléments individuels (7a, 7b, 7a', 7b', 7a", 7b") de la première pièce de carter (7, 7', 7") sont disposés les uns par rapport aux autres afin de former la première pièce de carter (7, 7', 7") et/ou les éléments individuels de la deuxième pièce de carter sont disposés les uns par rapport aux autres pour former la deuxième pièce de carter, la première pièce de carter (7, 7', 7") et la deuxième pièce de carter (9, 9', 9") sont disposées l'une par rapport à l'autre et la première pièce de carter (7, 7', 7") et la deuxième pièce de carter (9, 9', 9") et les éléments individuels (7a, 7b, 7a', 7b', 7a", 7b") sont reliés ensemble, par surmoulage de la première pièce de carter (7, 7') et de la deuxième pièce de carter (9, 9', 9") avec au moins un corps en matière thermodurcissable (11, 11') ou au moins un corps en matière thermoplastique (20").

28. Procédé selon la revendication 27, **caractérisée en ce que**
la première pièce de carter (7, 7', 7"), la deuxième pièce de carter (9, 9', 9"), au moins un élément individuel (7a, 7b, 7a', 7b', 7a", 7b"), le corps en matière thermoplastique (20") et/ou le corps en matière thermodurcissable (11, 11'), en particulier lors de l'assemblage de la première pièce de carter (7, 7', 7") et de la deuxième pièce de carter (9, 9', 9") et des éléments individuels (7a, 7a', 7a", 7b, 7b', 7b", 9, 9', 9") est/sont recouvert(s) à la manière d'un capot par surmoulage avec le corps en matière thermodurcissable (11, 11"), au moins partiellement, avec au moins un matériau thermoplastique (19, 19'), au moins une paroi d'au moins un renfoncement (27, 27') formé dans la première pièce de carter (7, 7', 7"), la deuxième pièce de carter et/ou dans au moins un élément individuel (7a, 7a', 7a") étant de préférence recouverte au moins par endroits avec le matériau thermoplastique (19, 19').

29. Procédé selon la revendication 27 ou 28, **caractérisé en ce que**
au moins un premier élément d'ancrage (35, 35', 35", 37, 37', 37", 39, 39', 39") est formé sur au moins une première surface et/ou dans le secteur d'au moins un bord terminal de la première pièce de carter (7, 7', 7"), de la deuxième pièce de carter (9, 9', 9") et/ou d'au moins un élément individuel (7a, 7b, 7a', 7b', 7a", 7b"), en particulier pendant la fabrication de la première pièce de carter (7, 7', 7"), de la deuxième pièce de carter (9,9',9") et/ou de l'élément individuel (7a, 7b, 7a', 7b', 7a", 7b"), au moins une deuxième surface du premier élément d'ancrage (35, 35', 35", 37, 37', 37", 39, 39', 39") étant recouverte de préférence au moins par endroits, en particulier en totalité, par le corps en matière thermodurcissable (11, 11') ou le corps en matière thermoplastique (20").

30. Procédé selon l'une quelconque des revendications 27 à 29, **caractérisé en ce que** au moins un deuxième élément d'ancrage (41, 41', 41") est formé sur au moins une troisième surface de la première pièce de carter, de la deuxième pièce de carter, d'au moins un élément individuel et/ou du corps en matière thermodurcissable (11, 11'), au moins une quatrième surface du deuxième élément d'ancrage (41, 41', 41") étant recouverte de préférence au moins par endroits, en particulier en totalité, par le corps en matière thermoplastique (20") ou le matériau thermoplastique (19, 19').

31. Procédé selon l'une quelconque des revendications 27 à 30, **caractérisé en ce que** au moins un premier élément de conduction de fluide est relié avec au moins un collecteur d'admission de fluide (3, 3', 3"), au moins un canal de compresseur (29, 29', 29") et/ou avec au moins un collecteur de sortie de fluide (5, 5', 5 ") du carter de compresseur en matière plastique (1, 1', 1''), le premier élément de conduction de fluide étant recouvert au moins par endroits par le corps en matière thermoplastique et/ou par le matériau thermoplastique (19, 19').

32. Procédé selon l'une quelconque des revendications 27 à 31, **caractérisée en ce qu'**au moins une troisième pièce de carter (15, 15', 15") est reliée à la première pièce de carter (7, 7', 7"), à la deuxième pièce de carter, à au moins un élément individuel, au corps en matière thermoplastique (20") et/ou au corps en matière thermodurcissable (11, 11'), en particulier au moyen d'au moins un élément de fixation (13, 13', 13"), la troisième pièce de carter (15, 15', 15") étant accueillie de préférence au moins par endroits dans au moins un deuxième renfoncement (27, 27', 27"), en particulier dans le premier renfoncement.

33. Procédé selon l'une quelconque des revendications 27 à 32, **caractérisé en ce que**
au moins un premier élément d'étanchéité (31, 31', 31") est formé dans la première pièce de carter (7, 7', 7"), au moins un deuxième élément d'étanchéité (32") est formé dans la deuxième pièce de carter, au moins un troisième élément d'étanchéité (33, 33', 33", 49, 49', 49") est formé dans la troisième pièce de carter (15, 15', 15") et/ou au moins un quatrième élément d'étanchéité (31,31', 31") est formé dans au moins un élément individuel (7a, 7a', 7a").

34. Procédé selon l'une quelconque des revendications 27 à 33, **caractérisé en ce que**
la première pièce de carter (7, 7', 7") et la deuxième pièce de carter (9, 9', 9") sont reliées ensemble au moyen d'au moins un quatrième élément de liaison (22"), au moins deux éléments individuels de la première pièce de carter sont reliés ensemble au moyen d'au moins un cinquième élément de liaison, au moins deux éléments individuels de la deuxième pièce de carter et/ou au moins un élément individuel de la première pièce de carter et au moins un élément individuel de la deuxième pièce de carter sont reliés ensemble, en particulier avant un surmoulage avec le corps en matière thermodurcissable (11, 11'), le corps en matière thermoplastique (20") et/ou un matériau thermoplastique (19, 19').

35. Turbocompresseur comprenant un carter de turbocompresseur en matière plastique (1, 1', 1 ") selon l'une quelconque des revendications 1 à 26.
